# EUROPEAN PATENT APPLICATION

(11) **EP 4 280 537 A1**
(43) Date of publication of application: **22.11.2023**
(21) Application number: 21919346.3
(22) Date of filing: 14.01.2021
(51) Int. Cl.: H04L 9/32

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: KOJIMA, Rikuhiro, Kawasaki-shi, Kanagawa 211-8588 (JP); YAMAMOTO, Dai, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2021/001097
(87) International publication number: WO 2022/153452

(57) **Abstract**

An information processing device (100) includes a public key group (110) including public keys (111 to 113). The information processing device (100) includes an aggregate public key (101) obtained by aggregating the public keys (111 to 113). The information processing device (100) accepts a request for adding a new public key (114) to the public key group (110) including the public keys (111 to 113) aggregated in the aggregate public key (101). When accepting the request, the information processing device (100) generates a public key (115) different from the new public key (114), based on information generated from the public keys (111 to 113) included in the public key group (110) and the new public key (114). The information processing device (100) adds the new public key (114) to the public key group (110) and also updates the aggregate public key (101), based on the generated different public key (115).

## Description

### FIELD

The present invention relates to a control method, a control program, and an information processing device.

### BACKGROUND

Conventionally, to avoid falsification of document information, a signature is sometimes electronically attached to the document information. In addition, there is a technique called an aggregate signature that aggregates a plurality of signatures attached to a plurality of pieces of document information that are different from each other into a single signature, using a plurality of private keys. When the validity of the aggregated single signature is verified, an aggregate public key obtained by aggregating a plurality of public keys corresponding to the plurality of private keys is used.

As an existing technique, for example, there is a technique of generating a first signature element from a first data portion, generating a first intermediate signature element from the generated first signature element and a second data portion, and generating a second signature element from the generated first intermediate signature element and a first private key.

### CITATION LIST

### PATENT DOCUMENT

Patent Document 1: Japanese Laid-open Patent Publication No. 2013-118706

### SUMMARY

### [TECHNICAL PROBLEM]

However, the conventional technique has a disadvantage of bringing about an increase in cost incurred for verifying the validity of the signature. For example, unless a new aggregate public key is generated and accumulated each time the number of pairs of the public keys and the private keys rises, the validity of the signature is not allowed to be verified in some cases, which will lead to an increase in cost incurred for verifying the validity of the signature.

In one aspect, an object of the present invention is to reduce the cost incurred for verifying the validity of a signature.

### [SOLUTION TO PROBLEM]

According to one form of embodiment, there is proposed a control method, a control program, and an information processing device that: accept requests intended to add a new public key to a public key group that includes a plurality of public keys aggregated in an aggregate public key used to verify validity of an aggregate signature obtained by aggregating a plurality of signatures; generate, when accepting the request, a different public key from the new public key, based on information generated from the plurality of public keys included in the public key group and the new public key; and add the new public key to the public key group, and also update the aggregate public key, based on the generated different public key.

According to an aspect of the embodiments, a control method comprising a process that is executed by a computer and includes: accepting requests intended to add a new public key to a public key group that includes a plurality of public keys aggregated in an aggregate public key used to verify validity of an aggregate signature obtained by aggregating a plurality of signatures; generating, when accepting the requests, a different public key from the new public key, based on information generated from the plurality of public keys included in the public key group and the new public key; and adding the new public key to the public key group, and also updating the aggregate public key, based on the generated different public key.

### [ADVANTAGEOUS EFFECTS OF INVENTION]

According to one form, the cost incurred for verifying the validity of a signature may be reduced.

### BRIEF DESCRIPTION OF DRAWINGS

FIG. 1 is an explanatory diagram illustrating a working example of an information processing method according to an embodiment;
FIG. 2 is an explanatory diagram illustrating an example of a signature control system 200;
FIG. 3 is a block diagram illustrating a hardware configuration example of an information processing device 100;
FIG. 4 is an explanatory diagram illustrating an example of the storage contents of a public key management table 400;
FIG. 5 is a block diagram illustrating a hardware configuration example of a verification-side terminal 206;
FIG. 6 is a block diagram illustrating a functional configuration example of the signature control system 200;
FIG. 7 is a block diagram illustrating a specific functional configuration example of the information processing device 100;
FIG. 8 is a block diagram illustrating a specific functional configuration example of the verification-side terminal 206;
FIG. 9 is an explanatory diagram illustrating a change in the storage contents of the public key management table 400;
FIG. 10 is an explanatory diagram (part 1) illustrating an example of the working of the signature control system 200;
FIG. 11 is an explanatory diagram (part 2) illustrating an example of the working of the signature control system 200;
FIG. 12 is an explanatory diagram illustrating effects of the signature control system 200;
FIG. 13 is a flowchart illustrating an example of a key aggregation processing procedure;
FIG. 14 is a flowchart illustrating an example of an initial key registration processing procedure;
FIG. 15 is a flowchart illustrating an example of a key verification processing procedure;
FIG. 16 is a flowchart illustrating an example of an initial key registration processing procedure;
FIG. 17 is a flowchart illustrating an example of a new key registration processing procedure; and
FIG. 18 is a flowchart illustrating an example of a reconfiguration processing procedure.

### DESCRIPTION OF EMBODIMENTS

Hereinafter, embodiments of a control method, a control program, and an information processing device according to the present invention will be described in detail with reference to the drawings.

### (Working Example of Information Processing Method According to Embodiment)

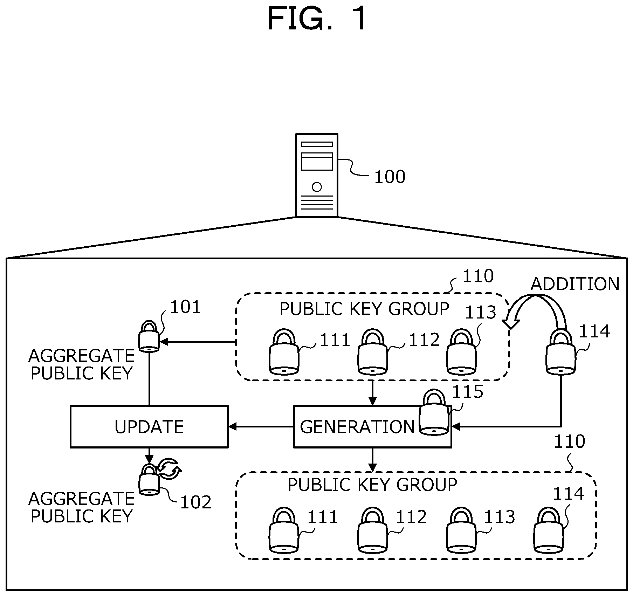

FIG. 1 is an explanatory diagram illustrating a working example of an information processing method according to an embodiment. An information processing device 100 is a computer for managing an aggregate public key used when verifying a single signature obtained by aggregating a plurality of signatures. In the following description, an aggregated single signature will be sometimes expressed as an "aggregate signature". The aggregate public key is, for example, a single public key obtained by aggregating a plurality of public keys corresponding to a plurality of private keys used when generating a plurality of signatures.

The signature is used to avoid falsification of document information, or to certify, confirm, approve the contents of document information, or demonstrate an intention such as consent to the contents of document information. For example, a use case is conceivable in which, in accordance with an approval flow within a certain organization, a plurality of approvers attaches personal signatures to document information while revising the document information, and after the final version of the document information is obtained, a server attaches the signature representing the organization to the final version of the document information. The signature representing the organization is, for example, an electronic seal (e-Seal). For example, in the organization, a private key group including the private keys corresponding to each approver and a public key group including the public keys corresponding to each private key are managed.

Incidentally, even if the validity of the final version of the document information can be verified by the signature representing the organization, it is difficult to enable verification of the validity of the approval flow. Therefore, it is desirable that the validity of the approval flow can be verified with the aggregate signature. For example, it is desirable that a process in which a plurality of approvers has attached personal signatures to document information in accordance with an approval flow can be verified with the aggregate signature. For example, aggregate signature implementation schemes include a Boneh-Lynn-Shacham (BLS) signaturebased implementation scheme, a lattice cryptography-based implementation scheme, and the like. The validity of the aggregate signature is verified with the aggregate public key obtained by aggregating a plurality of public keys managed in the organization.

Here, a situation is conceivable in which the public key group managed in the organization is updated. For example, it is conceivable that, as a result of transfer or addition of a staff who can be an approver, a new public key corresponding to the staff is generated and added to the public key group managed in the organization. At this time, the added public key may be generated by an encryption platform different from the encryption platforms for other public keys. In such a situation, it is difficult to efFiciently manage the aggregate public key while maintaining security, which will sometimes lead to an increase in the cost for verifying the validity of the aggregate signature with the aggregate public key.

The cost includes, for example, a management cost incurred when managing the aggregate public key and a processing cost incurred when verifying the validity of the aggregate signature.

For example, in such a situation, the public key group to which a new public key is added will be aggregated to generate a new aggregate public key, but there is a disadvantage 1 that the validity of the aggregate signature generated in the past is not allowed to be correctly verified with the new aggregate public key. For this reason, conventionally, unless all the aggregate public keys generated in the past are accumulated, the validity of the aggregate signature generated in the past is not allowed to be correctly verified, which will sometimes lead to an increase in cost. In addition, conventionally, the accumulated aggregate public keys will be searched for the aggregate public key corresponding to the aggregate signature that is an object to be verified, which will sometimes lead to an increase in cost.

Alternatively, administration for retaining the aggregate signature and the aggregate public key as a set is conceivable, but this is not preferable from the viewpoint of security. In addition, since an expiration date is sometimes set for the aggregate public key, even if the past aggregate public key is stored at the verification side, there is a case where the validity of the aggregate signature is not allowed to be correctly verified when the past aggregate public key has expired. In contrast to this, even if the latest aggregate public key is acquired at the verification side, the validity of the aggregate signature generated in the past is not allowed to be correctly verified.

In addition, for example, in such a situation, there is a disadvantage 2 that it is difficult to appropriately take measures against an attack called Rogue-key Attack. In Rogue-key Attack, for example, an attacker arbitrarily manipulates the aggregate public key by adding an invalid public key to the public key group managed in the organization. According to this, the attacker can attach a valid aggregate signature that is erroneously determined to be valid with the aggregate public key, to invalid document information.

For the above disadvantage 1, an approach 1 is conceivable in which the aggregate signature corresponding to the past aggregate public key obtained by aggregating a past public key group different from the latest public key group is reconfigured, and verification of the validity of the reconfigured aggregate signature is enabled with the latest aggregate public key obtained by aggregating the latest public key group. In the above approach 1, for example, the validity of the aggregate signature can be verified with the latest aggregate public key, by embedding the reciprocal of the public key that is not included in the past public key group but added to the latest public key group, into the aggregate signature corresponding to the past aggregate public key.

For the above disadvantage 2, an approach 2 for taking measures against Rogue-key Attack is conceivable. In the above approach 2, for example, each public key among a plurality of public keys is altered with hash values corresponding to each public key, and then an aggregate public key is generated, whereby it is made difficult to carry out Rogue-key Attack. The hash value is calculated by, for example, a cryptographic hash function. The hash value is calculated by, for example, secure hash algorithm (SHA)-256. The hash value corresponding to a certain public key is calculated, for example, by inputting a character string obtained by concatenating character strings of the certain public key and a plurality of public keys, to a predetermined hash function. Specifically, for example, the above approach 2 can be implemented by referring to the following reference documents 1 and 2.

Reference Document 1: Maxwell, Gregory, et al. "Simple schnorr multi-signatures with applications to bitcoin". Designs, Codes and Cryptography 87.9 (2019): 2139-2164.

Reference Document 2: "MuSig (explanation)", [online], June 5, 2018, [retrieved on January 5, 2021], Internet <URL: https://q iita.com/tna kagawa/ items/ b3d 70667a 559016aa 193 >

However, it is difficult to carry out the above approaches 1 and 2 in combination in order to solve both of the above disadvantages 1 and 2. For example, in the above approach 2, each public key is altered with hash values corresponding to each public key before being aggregated. Therefore, even if the reciprocal of any public key is embedded into the aggregate signature in the above approach 1, the validity of the aggregate signature will not be allowed to be verified with the aggregate public key obtained by aggregating the latest public key group in some cases.

In addition, for example, it is conceivable to update all the aggregate signatures generated in the past each time the public key group is updated, such that all the aggregate signatures generated in the past correspond to the aggregate public key obtained by aggregating the updated public key group, by the above approach 2, but this will lead to an increase in cost. Here, a situation in which the frequency of updating the public key group is relatively high is conceivable, and as the frequency of updating the public key group is higher, the cost is more likely to increase.

Thus, in the present embodiment, an information processing method capable of efFiciently managing the aggregate public key while maintaining security and reducing the cost for verifying the validity of the aggregate signature with the aggregate public key will be described.

In FIG. 1, the information processing device 100 includes a public key group 110 including public keys 111 to 113. The information processing device 100 includes an aggregate public key 101 obtained by aggregating the public keys 111 to 113 included in the public key group 110. The aggregate public key 101 is obtained, for example, by altering each of the public keys 111 to 113 with hash values corresponding to each of the public keys 111 to 113 and then aggregating the altered public keys 111 to 113. Specifically, the aggregate public key 101 is obtained by aggregating a new public key obtained by altering the public key 111, a new public key obtained by altering the public key 112, and a new public key obtained by altering the public key 113.

The hash value corresponding to the public key 111 is obtained, for example, by inputting a character string obtained by concatenating character strings of the public keys 111 to 113 and the public key 111, to a hash function. In addition, the hash value corresponding to the public key 112 is obtained, for example, by inputting a character string obtained by concatenating character strings of the public keys 111 to 113 and the public key 112, to the hash function. In addition, the hash value corresponding to the public key 113 is obtained, for example, by inputting a character string obtained by concatenating character strings of the public keys 111 to 113 and the public key 113, to the hash function. The aggregate public key 101 is used, for example, to verify the validity of an aggregate signature obtained by aggregating a plurality of signatures.
(1-1) The information processing device 100 accepts a request for adding a new public key 114 to the public key group 110 including the public keys 111 to 113 aggregated in the aggregate public key 101. For example, the information processing device 100 accepts the request for adding the new public key 114 to the public key group 110, based on an operation input from a user.
(1-2) When accepting the request, the information processing device 100 generates a public key 115 different from the new public key 114, based on information generated from the public keys 111 to 113 included in the public key group 110 and the new public key 114. For example, the information processing device 100 inputs the plurality of public keys obtained by altering each of the public keys 111 to 113 with the hash values corresponding to each of the public keys 111 to 113 and the new public key 114 to a hash function and calculates a hash value. Then, the information processing device 100 generates the public key 115 different from the public key 114, for example, by altering the new public key 114 with the calculated hash value.
(1-3) The information processing device 100 adds the new public key 114 to the public key group 110 and also updates the aggregate public key 101, based on the generated different public key 115. For example, the information processing device 100 updates the aggregate public key 101 to an aggregate public key 102, based on the generated different public key 115. The aggregate public key 102 is obtained, for example, by adding the public key 115 to the aggregate public key 101. The information processing device 100 does not have to store the aggregate public key 101 as long as the aggregate public key 102 is stored.

This allows the information processing device 100 to efFiciently manage the aggregate public key while maintaining security and to reduce the cost for verifying the validity of the aggregate signature.

For example, the information processing device 100 can enable verification of the validity of the aggregate signature generated such that verification of the validity thereof is enabled with the past aggregate public key, also with the latest aggregate public key. Specifically, even if the verification side has no past aggregate public key, the information processing device 100 can enable verification of the validity of the aggregate signature corresponding to the past aggregate public key, with the latest aggregate public key, by reconfiguring the aggregate signature. Since the information processing device 100 does not have to store the past aggregate public key and does not have to search for the past aggregate public key when verifying the validity of the aggregate signature, the cost for verifying the validity of the aggregate signature may be reduced.

By enabling verification of the validity of the aggregate signature, the information processing device 100 can enable verification of the progress of generation of the plurality of signatures aggregated in the aggregate signature. Then, the information processing device 100 may avoid circumstances that prompt the verification side to erroneously regard the aggregate signature as a valid aggregate signature and erroneously regard the invalid document information as valid document information, and may maintain security.

In addition, the information processing device 100 can update the aggregate public key, based on a public key that has been obtained by altering the new public key to be added to the public key group and is different from the new public key to be added to the public key group. Therefore, the information processing device 100 may appropriately take measures against Rogue-key Attack and may maintain security.

Here, the case where the information processing device 100 accepts the request for adding the new public key 114 to the public key group 110 has been described, but this is not restrictive. For example, there may be a case where the information processing device 100 accepts a request for deleting any one of the public keys 111 to 113 from the public key group 110.

Here, the case where verification of the validity of an approval flow within a certain organization is enabled with the aggregate signature has been described, but this is not restrictive. For example, there may be a case where verification of the validity of an approval flow across different organizations is enabled with the aggregate signature. In this case, it is conceivable that signatures in different organizations are aggregated in the aggregate signature.

### (Example of Signature Control System 200)

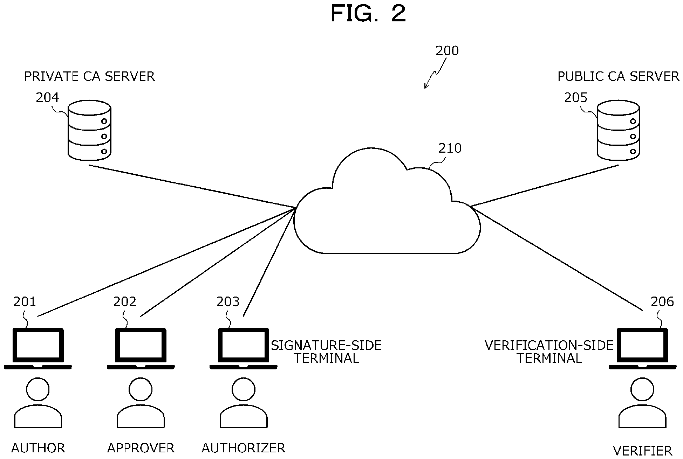

Next, an example of a signature control system 200 to which the information processing device 100 illustrated in FIG. 1 is applied will be described with reference to FIG. 2.

FIG. 2 is an explanatory diagram illustrating an example of the signature control system 200. In FIG. 2, the signature control system 200 includes one or more signature-side terminals 201 each corresponding to one of different authors, one or more signature-side terminals 202 each corresponding to one of different approvers, and one or more signature-side terminals 203 each corresponding to one of different authorizers. The signature control system 200 further includes a private certificate authority (CA) server 204, a public CA server 205, and a verification-side terminal 206 corresponding to a verifier.

In the signature control system 200, the signature-side terminals 201 to 203 and the private CA server 204 are coupled to each other via a wired or wireless network 210. For example, the network 210 is a local area network (LAN), a wide area network (WAN), the Internet, or the like.

In addition, in the signature control system 200, the private CA server 204 and the public CA server 205 are coupled via the wired or wireless network 210. In addition, in the signature control system 200, the private CA server 204 and the verification-side terminal 206 are coupled via the wired or wireless network 210. In addition, in the signature control system 200, the public CA server 205 and the verification-side terminal 206 are coupled via the wired or wireless network 210.

The signature-side terminal 201 is a computer used by the author who creates document information. The signature-side terminal 201 generates new document information, based on an operation input from the author.

The signature-side terminal 201 requests the private CA server 204 to generate a signature to be attached to the generated new document information and acquires the signature to be attached to the generated new document information. The signature-side terminal 201 transmits the generated new document information and the acquired signature to the private CA server 204 in association with each other. For example, the signature-side terminal 201 is a server, a personal computer (PC), a tablet terminal, a smartphone, or the like.

The signature-side terminal 202 is a computer used by the approver who approves document information. The signature-side terminal 202 acquires the document information to which the signature is attached, from the private CA server 204, based on an operation input from the approver. The signature-side terminal 202 revises the acquired document information and generates new document information, based on an operation input from the approver.

The signature-side terminal 202 requests the private CA server 204 to generate a signature to be attached to the generated new document information and acquires the signature to be attached to the generated new document information. The signature-side terminal 202 transmits the generated new document information and the acquired signature to the private CA server 204 in association with each other. For example, the signature-side terminal 202 is a server, a PC, a tablet terminal, a smartphone, or the like.

The signature-side terminal 203 is a computer used by the authorizer who authorizes document information. The signature-side terminal 203 acquires the document information to which the signature is attached, from the private CA server 204, based on an operation input from the authorizer. The signature-side terminal 203 revises the acquired document information and generates new document information, based on an operation input from the authorizer.

The signature-side terminal 203 requests the private CA server 204 to generate a signature to be attached to the generated new document information and acquires the signature to be attached to the generated new document information. The signature-side terminal 203 transmits the generated new document information and the acquired signature to the private CA server 204 in association with each other. For example, the signature-side terminal 203 is a server, a PC, a tablet terminal, a smartphone, or the like.

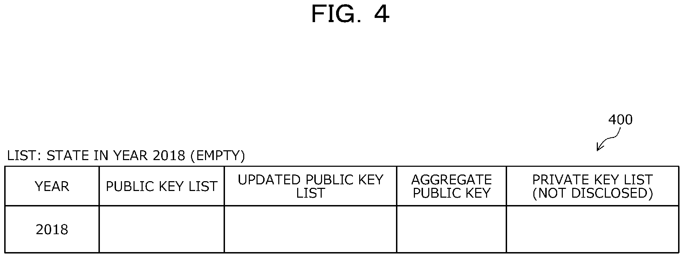

The private CA server 204 is a computer that manages the private key and the public key. The private CA server 204 generates key pairs of the private keys and the public keys corresponding to each terminal among the signature-side terminals 201 to 203. The private CA server 204 manages a private key list in which the generated private key is registered and a public key list in which the generated public key is registered, by storing the private key list and the public key list using a public key management table 400 to be described later with reference to FIG. 4.

The private CA server 204 generates an aggregate public key obtained by aggregating a plurality of public keys and manages the generated aggregate public key by storing the aggregate public key using the public key management table 400 to be described later with reference to FIG. 4. When generating the aggregate public key, the private CA server 204 will update the public keys and the private keys, based on the hash value based on the plurality of public keys. The private CA server 204 manages the updated public key list in which the updated public key is registered, by storing the updated public key list using the public key management table 400 to be described later with reference to FIG. 4. Instead of the private key list, the private CA server 204 may manage the updated private key list in which the updated private key is registered, by storing the updated private key list using the public key management table 400 to be described later with reference to FIG. 4. The private CA server 204 transmits the generated aggregate public key to the public CA server 205.

When generating a new key pair of the private key and the public key, the private CA server 204 adds the generated private key to the private key list in the public key management table 400 to be described later with reference to FIG. 4 and adds the generated public key to the public key list in the public key management table 400 to be described later with reference to FIG. 4. For example, when a new terminal that can be any terminal among the signature-side terminals 201 to 203 is added to the signature control system 200, the private CA server 204 generates a new key pair of the private key and the public key corresponding to the added terminal.

In addition, the private CA server 204 updates the aggregate public key stored in the public key management table 400 to be described later with reference to FIG. 4, in response to the addition of the new public key to the public key list in the public key management table 400 to be described later with reference to FIG. 4. When updating the aggregate public key, the private CA server 204 will update the new public key and the new private key, based on the hash value based on the plurality of public keys. The private CA server 204 adds the updated public key of this time to the updated public key list in the public key management table 400 to be described later with reference to FIG. 4. The private CA server 204 may add the updated private key of this time to the updated private key list in the public key management table 400 to be described later with reference to FIG. 4.

In response to a request from any terminal among the signature-side terminals 201 to 203, the private CA server 204 generates a signature to be attached to the document information, based on the private key of the generated key pair. The private CA server 204 transmits the generated signature to the requesting source terminal. The private CA server 204 generates an aggregate signature obtained by aggregating a plurality of signatures. The private CA server 204 manages the generated aggregate signature so as to be able to specify to which point in time the aggregate public key corresponding to the generated aggregate signature is relevant. The private CA server 204 transmits the generated aggregate signature to the verification-side terminal 206.

In response to a request from the verification-side terminal 206, the private CA server 204 reconfigures the aggregate signature and transmits the reconfigured aggregate signature to the verification-side terminal 206. The private CA server 204 reconfigures the aggregate signature, for example, based on to which point in time the aggregate public key corresponding to the aggregate signature is relevant. The private CA server 204 has a function as the information processing device 100 illustrated in FIG. 1. For example, the private CA server 204 is a server, a PC, or the like.

The public CA server 205 is a computer that manages the aggregate public key. The public CA server 205 receives the aggregate public key from the private CA server 204. The public CA server 205 transmits the received aggregate public key to the verification-side terminal 206. For example, the public CA server 205 is a server, a PC, or the like.

The verification-side terminal 206 is a computer used by the verifier. The verification-side terminal 206 receives the aggregate signature from the private CA server 204. The verification-side terminal 206 receives the latest aggregate public key from the public CA server 205. The verification-side terminal 206 verifies whether or not the received aggregate signature is valid, based on the received aggregate public key.

In addition, when the received aggregate signature does not correspond to the received latest aggregate public key, the verification-side terminal 206 may transmit a request for reconfiguring the received aggregate signature, to the private CA server 204. The verification-side terminal 206 acquires the reconfigured aggregate signature from the private CA server 204. The verification-side terminal 206 verifies whether or not the reconfigured aggregate signature is valid, based on the received aggregate public key. For example, the verification-side terminal 206 is a server, a PC, or the like.

Here, the case where the private CA server 204 generates the signature to be attached to new document information has been described, but this is not restrictive. For example, there may be a case where the private CA server 204 distributes the private keys to each terminal among the signature-side terminals 201 to 203. In this case, each of the signature-side terminals 201 to 203 generates a signature to be attached to new document information, based on the distributed private key.

### (Hardware Configuration Example of Information Processing Device 100)

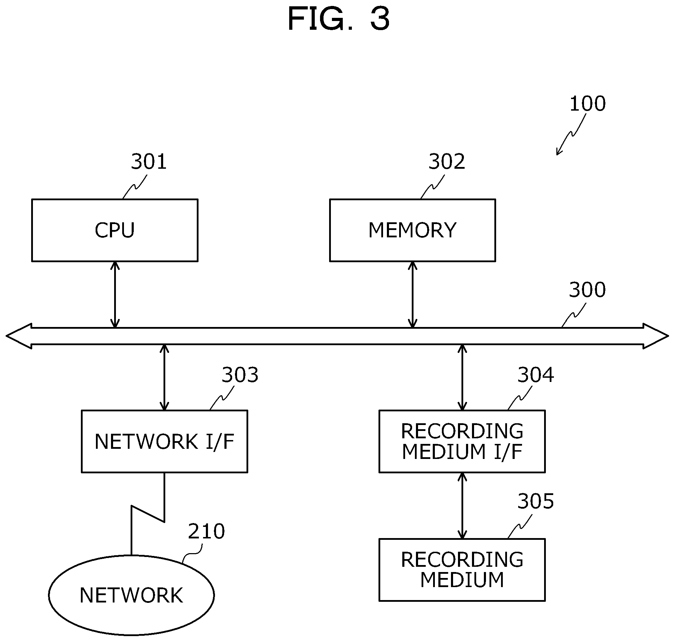

Next, a hardware configuration example of the information processing device 100 applied to the private CA server 204 will be described with reference to FIG. 3.

FIG. 3 is a block diagram illustrating a hardware configuration example of the information processing device 100. In FIG. 3, the information processing device 100 includes a central processing unit (CPU) 301, a memory 302, a network interface (I/F) 303, a recording medium I/F 304, and a recording medium 305. In addition, the individual components are coupled to each other with a bus 300.

Here, the CPU 301 takes overall control of the information processing device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line and is coupled to another computer via the network 210. Then, the network I/F 303 takes control of an interface between the network 210 and the inside and controls input and output of data from and to another computer. For example, the network I/F 303 is a modem, a LAN adapter, or the like.

The recording medium I/F 304 controls reading and writing of data from and to the recording medium 305 under the control of the CPU 301. For example, the recording medium I/F 304 is a disk drive, a solid state drive (SSD), a universal serial bus (USB) port, or the like. The recording medium 305 is a nonvolatile memory that stores data written under the control of the recording medium I/F 304. For example, the recording medium 305 is a disk, a semiconductor memory, a USB memory, or the like. The recording medium 305 may be attachable to and detachable from the information processing device 100.

For example, the information processing device 100 may include a keyboard, a mouse, a display, a printer, a scanner, a microphone, a speaker, or the like, as well as the components described above. In addition, the information processing device 100 may include a plurality of the recording medium I/Fs 304 and recording media 305. In addition, the information processing device 100 does not have to include the recording medium I/F 304 or the recording medium 305.

### (Storage Contents of Public Key Management Table 400)

Next, an example of the storage contents of the public key management table 400 will be described with reference to FIG. 4. The public key management table 400 is implemented by a storage area such as the memory 302 or the recording medium 305 of the information processing device 100 illustrated in FIG. 3, for example.

FIG. 4 is an explanatory diagram illustrating an example of the storage contents of the public key management table 400. As illustrated in FIG. 4, the public key management table 400 has fields for year, public key list, updated public key list, aggregate public key, and private key list. In the public key management table 400, public key management information is stored as a record, by updating information in each field every time the public key list is updated.

In the year field, the year is set. In the public key list field, a public key list in which a public key available in the above year is registered is set. In the updated public key list field, an updated public key list in which an updated public key obtained by updating at least one public key in the above public key list is registered is set. The updated public key is obtained, for example, by altering any one public key with a hash value based on the one public key and another public key included in the above public key list before the one public key.

In the aggregate public key field, an aggregate public key obtained by aggregating a plurality of public keys in the public key list is set. The aggregate public key is obtained, for example, by altering each one public key in the public key list with a hash value based on the one public key and another public key included in the above public key list before the one public key and then aggregating the altered public keys. In the private key list field, a private key list in which a private key available in the above year is registered is set. In the private key list field, an updated private key list in which a private key available in the above year is altered with the above hash value and then registered may be set. The private key list is preferably not disclosed to the outside, for example.

Here, the case where the public key management table 400 stores either the private key list or the updated private key list with the private key list field has been described, but this is not restrictive. For example, there may be a case where the public key management table 400 stores both of the private key list and the updated private key list.

### (Hardware Configuration Example of Verification-Side Terminal 206)

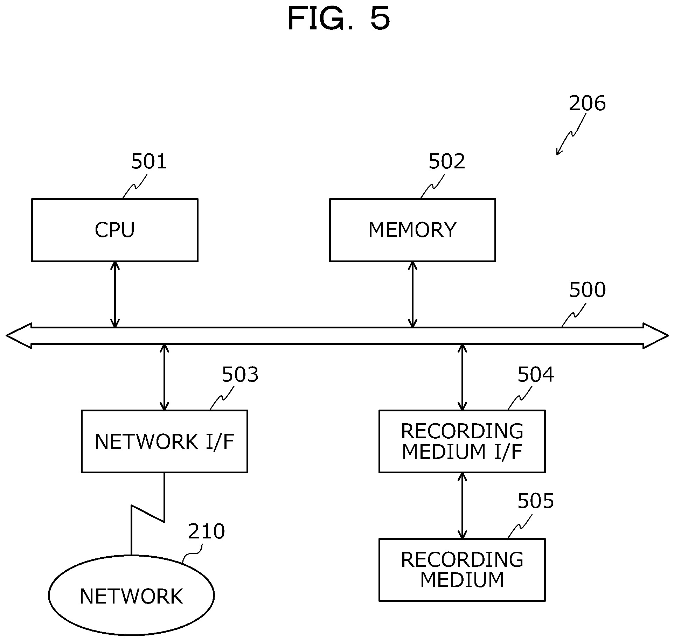

Next, a hardware configuration example of the verification-side terminal 206 will be described with reference to FIG. 5.

FIG. 5 is a block diagram illustrating a hardware configuration example of the verification-side terminal 206. In FIG. 5, the verification-side terminal 206 includes a CPU 501, a memory 502, a network I/F 503, a recording medium I/F 504, and a recording medium 505. In addition, the individual components are coupled to each other with a bus 500.

Here, the CPU 501 takes overall control of the verification-side terminal 206. For example, the memory 502 includes a ROM, a RAM, a flash ROM, and the like. Specifically, for example, the flash ROM or the ROM stores various programs, and the RAM is used as a work area for the CPU 501. The programs stored in the memory 502 are loaded into the CPU 501 to cause the CPU 501 to execute coded processing.

The network I/F 503 is coupled to the network 210 through a communication line and is coupled to another computer via the network 210. Then, the network I/F 503 takes control of an interface between the network 210 and the inside and controls input and output of data from and to another computer. For example, the network I/F 503 is a modem, a LAN adapter, or the like.

The recording medium I/F 504 controls reading and writing of data from and to the recording medium 505 under the control of the CPU 501. For example, the recording medium I/F 504 is a disk drive, an SSD, a USB port, or the like. The recording medium 505 is a nonvolatile memory that stores data written under the control of the recording medium I/F 504. For example, the recording medium 505 is a disk, a semiconductor memory, a USB memory, or the like. The recording medium 505 may be attachable to and detachable from the verification-side terminal 206.

For example, the verification-side terminal 206 may include a keyboard, a mouse, a display, a printer, a scanner, a microphone, a speaker, or the like, as well as the components described above. In addition, the verification-side terminal 206 may include a plurality of the recording medium I/Fs 504 and a plurality of the recording media 505. In addition, the verification-side terminal 206 does not have to include the recording medium I/F 504 or the recording medium 505.

### (Hardware Configuration Example of Signature-Side Terminals 201 to 203)

Specifically, since the hardware configuration example of the signature-side terminals 201 to 203 is similar to the hardware configuration example of the verification-side terminal 206 illustrated in FIG. 5, description thereof will be omitted.

### (Hardware Configuration Example of Public CA Server 205)

Specifically, since a hardware configuration example of the public CA server 205 is similar to the hardware configuration example of the verification-side terminal 206 illustrated in FIG. 5, description thereof will be omitted.

### (Functional Configuration Example of Signature Control System 200)

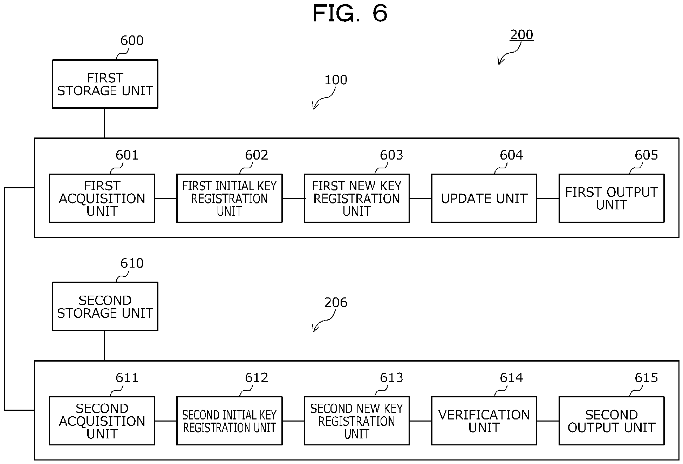

Next, a functional configuration example of the signature control system 200 will be described with reference to FIG. 6.

FIG. 6 is a block diagram illustrating a functional configuration example of the signature control system 200. In the signature control system 200, the information processing device 100 includes a first storage unit 600, a first acquisition unit 601, a first initial key registration unit 602, a first new key registration unit 603, an update unit 604, and a first output unit 605.

The first storage unit 600 is implemented by a storage area such as the memory 302 or the recording medium 305 illustrated in FIG. 3, for example. Hereinafter, a case where the first storage unit 600 is included in the information processing device 100 will be described, but this is not restrictive. For example, there may be a case where the first storage unit 600 is included in a device different from the information processing device 100, and the storage contents of the first storage unit 600 are allowed to be referred to by the information processing device 100.

The first acquisition unit 601 to the first output unit 605 function as an example of a control unit of the information processing device 100. Specifically, for example, the first acquisition unit 601 to the first output unit 605 implement functions thereof by causing the CPU 301 to execute a program stored in a storage area such as the memory 302 or the recording medium 305 or by the network I/F 303 illustrated in FIG. 3. A processing result of each functional unit is stored, for example, in a storage area such as the memory 302 or the recording medium 305 illustrated in FIG. 3.

The first storage unit 600 stores various types of information to be referred to or updated in the processing of each functional unit. The first storage unit 600 stores a plurality of pieces of document information. The document information is, for example, document information revised by a plurality of people, such as a contract or a source code. The plurality of pieces of document information includes, for example, pieces of document information indicating respective versions of a plurality of versions of a first document.

The first storage unit 600 stores a public key group and a private key group. The public key group includes a public key corresponding to a signer. The signer includes, for example, a corporation. The private key group includes a private key corresponding to a signer. The first storage unit 600 stores, for example, the public key group and the private key group using the public key management table 400 illustrated in FIG. 4.

The first storage unit 600 stores an updated public key group and an updated private key group. The updated public key group includes a public key after being updated by a hash value based on any one or more public keys. The updated private key group includes a private key after being updated by a hash value based on any one or more public keys. The first storage unit 600 stores, for example, the updated public key group and the updated private key group using the public key management table 400 illustrated in FIG. 4. The first storage unit 600 stores a signature attached to document information. The first storage unit 600 stores an aggregate signature obtained by aggregating a plurality of signatures generated in accordance with an approval flow.

The first acquisition unit 601 acquires various types of information to be used for the processing of each functional unit. The first acquisition unit 601 stores the acquired various types of information in the first storage unit 600 or outputs the acquired various types of information to each functional unit. In addition, the first acquisition unit 601 may output various types of information stored in the first storage unit 600 to each functional unit. The first acquisition unit 601 acquires various types of information, for example, based on an operation input from the user. The first acquisition unit 601 may receive various types of information from a device different from the information processing device 100, for example.

The first acquisition unit 601 accepts an addition request. The addition request is, for example, a request for adding a new public key to the public key group. The addition request includes, for example, information that can specify the public key to be added. The public key group includes a plurality of public keys aggregated in the aggregate public key used to verify the validity of the aggregate signature. The aggregate signature is obtained by aggregating a plurality of signatures. For example, the first acquisition unit 601 accepts the addition request, based on an operation input from the user.

The first acquisition unit 601 accepts a deletion request. The deletion request is, for example, a request for deleting any public key from the public key group. The deletion may refer to, for example, invalidation. The deletion request includes, for example, information that can specify the public key to be deleted. For example, the first acquisition unit 601 accepts the deletion request, based on an operation input from the user.

The first acquisition unit 601 may accept a start trigger to start processing of any functional unit. The start trigger is, for example, a predetermined operation input made by the user. The start trigger may be, for example, reception of predetermined information from another computer. The start trigger may be, for example, output of predetermined information by any functional unit.

The first acquisition unit 601 accepts, for example, acceptance of the addition request as a start trigger to start processing of the first initial key registration unit 602, the first new key registration unit 603, and the update unit 604. The first acquisition unit 601 accepts, for example, acceptance of the deletion request as a start trigger to start processing of the first initial key registration unit 602, the first new key registration unit 603, and the update unit 604.

The first initial key registration unit 602 alters each of a plurality of public keys initially included in the public key group and generates secure public keys. The plurality of public keys initially included in the public key group is, for example, a plurality of public keys initially added to an empty public key group. The plurality of public keys initially included in the public key group may be, for example, a preset plurality of public keys included in the public key group. For example, the first initial key registration unit 602 alters each of first public keys initially included in the public key group, based on information generated from the first public keys. Specifically, the first initial key registration unit 602 calculates hash values corresponding to each of the first public keys initially included in the public key group by a hash function and adds the calculated hash values to each of the first public keys.

More specifically, the first initial key registration unit 602 concatenates character strings of the respective first public keys initially included in the public key group and any one of the first public keys and inputs the concatenated character strings to the hash function, thereby calculating the hash value corresponding to the any one of the first public keys. Then, the first initial key registration unit 602 alters each one first public key by adding the calculated hash value corresponding to the one first public key to the one first public key. This allows the first initial key registration unit 602 to improve security.

When accepting the addition request, the first new key registration unit 603 generates a public key different from a new public key to be added, based on information generated from the plurality of public keys included in the public key group and the new public key. For example, when accepting the first time addition request, the first new key registration unit 603 calculates the hash value by concatenating the altered first public keys and the new public key and then inputting the concatenated first public keys and new public key to the hash function. Then, the first new key registration unit 603 generates a public key different from the new public key by adding the calculated hash value to the new public key. This allows the first new key registration unit 603 to improve security.

For example, when accepting the second and subsequent time addition requests, the first new key registration unit 603 generates a public key different from the new public key, based on information generated from the public keys generated last time and the new public key to be added this time. Specifically, the first new key registration unit 603 calculates the hash value by concatenating the public keys generated last time and the new public key and then inputting the concatenated public keys to the hash function. Then, the first new key registration unit 603 generates a public key different from the new public key by adding the calculated hash value to the new public key. This allows the first new key registration unit 603 to improve security.

Here, the public key generated last time is information already generated based on a plurality of public keys included in the public key group. Therefore, when accepting the second and subsequent time addition requests, the first new key registration unit 603 can go without directly referring to the plurality of public keys included in the public key group, by referring to the public key generated last time. Then, the first new key registration unit 603 can generate the public key that is different from the new public key and is based on information generated from the plurality of public keys included in the public key group and the new public key, without directly referring to the plurality of public keys included in the public key group. As a result, the first new key registration unit 603 may reduce the processing cost.

When accepting the addition request, the update unit 604 adds a new public key to the public key group. For example, when adding a new public key, the update unit 604 adds the new public key to the public key group such that the public key to be added this time can be distinguished from the public keys included in the public key group before the public key to be added this time. This allows the update unit 604 to update the public key group to the latest state. In addition, the update unit 604 can make it possible to distinguish the public key added to the public key group at a certain timing and the public keys included in the public key group before the added public key.

When accepting the deletion request, the update unit 604 deletes one of the public keys from the public key group. In addition, when accepting the deletion request, the update unit 604 may leave the one of the public keys in the public key group without deleting the one of the public keys if the element relating to the one of the public keys is removed from the aggregate public key. This allows the update unit 604 to enable update of the aggregate public key to the latest state.

The update unit 604 generates the aggregate public key, based on the public key group. For example, the update unit 604 generates the aggregate public key by adding a plurality of public keys generated by the first initial key registration unit 602. This allows the update unit 604 to obtain the aggregate public key capable of verifying the validity of the aggregate signature. In addition, the update unit 604 may improve security.

The update unit 604 updates the aggregate public key, based on the public key generated by the first new key registration unit 603. The update unit 604 updates the aggregate public key by adding the public key generated by the first new key registration unit 603 to the aggregate public key. This allows the update unit 604 to obtain a new aggregate public key capable of verifying the validity of the aggregate signature. In addition, the update unit 604 may improve security.

The first output unit 605 outputs a processing result of at least any one of the functional units. The output format is, for example, display on a display, print output to a printer, transmission to an external device by the network I/F 303, or storage in a storage area such as the memory 302 or the recording medium 305. This allows the first output unit 605 to make it possible for the user to be notified of the processing result of at least any one of the functional units and to improve convenience of the information processing device 100.

The first output unit 605 outputs the public key group. For example, the first output unit 605 outputs the public key group such that the verification-side terminal 206 can refer to the public key group. This allows the first output unit 605 to make it possible for the verification-side terminal 206 to verify the validity of the aggregate public key. The first output unit 605 outputs the aggregate public key updated by the update unit 604. For example, the first output unit 605 outputs the aggregate public key updated by the update unit 604 such that the verification-side terminal 206 can refer to the aggregate public key. This allows the first output unit 605 to make it possible for the verification-side terminal 206 to verify the validity of the aggregate signature with the aggregate public key.

In the signature control system 200, the verification-side terminal 206 includes a second storage unit 610, a second acquisition unit 611, a second initial key registration unit 612, a second new key registration unit 613, a verification unit 614, and a second output unit 615.

The second storage unit 610 is implemented by a storage area such as the memory 502 or the recording medium 505 illustrated in FIG. 5, for example. Hereinafter, a case where the second storage unit 610 is included in the verification-side terminal 206 will be described, but this is not restrictive. For example, there may be a case where the second storage unit 610 is included in a device different from the verification-side terminal 206, and the storage contents of the second storage unit 610 are allowed to be referred to by the verification-side terminal 206.

The second acquisition unit 611 to the second output unit 615 function as an example of a control unit of the verification-side terminal 206. Specifically, for example, the second acquisition unit 611 to the second output unit 615 implement functions thereof by causing the CPU 501 to execute a program stored in a storage area such as the memory 502 or the recording medium 505 or by the network I/F 503 illustrated in FIG. 5. A processing result of each functional unit is stored in, for example, a storage area such as the memory 502 or the recording medium 505 illustrated in FIG. 5.

The second storage unit 610 stores various types of information to be referred to or updated in the processing of each functional unit. The second storage unit 610 stores the aggregate signature that is associated with a plurality of pieces of document information and is obtained by aggregating signatures corresponding to each piece of document information among the plurality of pieces of document information. The aggregate signature is an object of which the validity is to be verified. The aggregate signature is acquired by the second acquisition unit 611, for example. The second storage unit 610 stores the public key group. The public key group is acquired by the second acquisition unit 611, for example. The second storage unit 610 stores the aggregate public key. The aggregate public key is acquired by the second acquisition unit 611, for example.

The second acquisition unit 611 acquires various types of information to be used for the processing of each functional unit. The second acquisition unit 611 stores the acquired various types of information in the storage unit or outputs the acquired various types of information to each functional unit. In addition, the second acquisition unit 611 may output various types of information stored in the storage unit to each functional unit. The second acquisition unit 611 acquires various types of information, based on, for example, an operation input from the verifier. The second acquisition unit 611 may receive various types of information from, for example, a device different from the verification-side terminal 206.

The second acquisition unit 611 acquires the aggregate signature. The aggregate signature is, for example, an aggregate signature generated such that the validity thereof is verifiable with the latest aggregate public key. The aggregate signature may be, for example, an aggregate signature generated such that the validity thereof is verifiable with a past aggregate public key instead of the latest aggregate public key. In other words, the aggregate signature may be an aggregate signature generated before the aggregate public key is updated to the latest state. The second acquisition unit 611 acquires the aggregate signature, based on an operation input from the verifier.

The second acquisition unit 611 acquires the public key group. The second acquisition unit 611 acquires, for example, the latest public key group. Specifically, the second acquisition unit 611 acquires the latest public key group by receiving the latest public key group from the information processing device 100. The second acquisition unit 611 acquires the aggregate public key. For example, the second acquisition unit 611 acquires the latest aggregate public key obtained by aggregating the latest public key group. Specifically, the second acquisition unit 611 acquires the latest aggregate public key by receiving the latest aggregate public key from the information processing device 100.

The second acquisition unit 611 may accept a start trigger to start processing of any functional unit. The start trigger is, for example, a predetermined operation input made by the verifier. The start trigger may be, for example, reception of predetermined information from another computer. The start trigger may be, for example, output of predetermined information by any functional unit. For example, the second acquisition unit 611 may accept acquisition of the aggregate signature as a start trigger to start processing of the second initial key registration unit 612, the second new key registration unit 613, and the verification unit 614.

The second initial key registration unit 612 alters each of the first public keys initially included in the acquired public key group, based on information generated from the first public keys. The second initial key registration unit 612 alters the first public keys by, for example, calculating hash values corresponding to each of the first public keys initially included in the public key group by a hash function and adding the calculated hash values to each of the first public keys.

Specifically, the second initial key registration unit 612 concatenates character strings of the respective first public keys initially included in the public key group and any one of the first public keys and inputs the concatenated character strings to the hash function, thereby calculating the hash value corresponding to the one of the first public keys. Then, the second initial key registration unit 612 alters each one first public key by adding the calculated hash value corresponding to the one first public key to the one first public key. This allows the second initial key registration unit 612 to obtain the altered first public keys used when the latest aggregate public key was generated, as a guideline for verifying the validity of the aggregate public key.

The second new key registration unit 613 alters each of second public keys added later to the acquired public key group, based on information generated from another public key included in the public key group before the second public keys. For example, the second new key registration unit 613 calculates a hash value by concatenating each of the second public keys added next to the first public keys and the altered first public keys and then inputting the concatenated second public keys and first public keys to the hash function. Then, the second new key registration unit 613 adds the calculated hash value to each of the second public keys added next to the first public keys.

The second new key registration unit 613 concatenates the second public key altered immediately previously and another second public key added next to the second public key altered immediately previously and then inputs the concatenated second public keys to the hash function, thereby repeatedly calculating the hash value and adding the hash value to the another second public key. This allows the second new key registration unit 613 to obtain the altered second public keys used when the latest aggregate public key was generated, as a guideline for verifying the validity of the aggregate public key.

The verification unit 614 verifies the validity of the acquired aggregate public key. For example, when the acquired public key group does not include the second public key, the verification unit 614 verifies the validity of the acquired aggregate public key, based on the altered first public keys. Specifically, when the aggregate public key obtained by adding the altered first public keys matches the acquired aggregate public key, the verification unit 614 determines that the acquired aggregate public key is valid. On the other hand, specifically, when the aggregate public key obtained by adding the altered first public keys does not match the acquired aggregate public key, the verification unit 614 determines that the acquired aggregate public key is not valid. This allows the verification unit 614 to improve security.

For example, when the acquired public key group includes the second public key, the verification unit 614 verifies the validity of the acquired aggregate public key, based on the altered first public keys and the altered second public key. Specifically, when the aggregate public key obtained by adding the altered first public keys and the altered second public key matches the acquired aggregate public key, the verification unit 614 determines that the acquired aggregate public key is valid. On the other hand, specifically, when the aggregate public key obtained by adding the altered first public keys and the altered second public key does not match the acquired aggregate public key, the verification unit 614 determines that the acquired aggregate public key is not valid. This allows the verification unit 614 to improve security.

When determining that the acquired aggregate public key is valid as a result of the verification, the verification unit 614 verifies the validity of the acquired aggregate signature, based on the acquired aggregate public key. For example, when the acquired aggregate signature is an aggregate signature generated such that the validity thereof is verifiable with the latest aggregate public key, the verification unit 614 verifies the validity of the acquired aggregate signature with the acquired aggregate public key. This allows the verification unit 614 to verify the validity of the aggregate signature, to verify the validity of the document information and the validity of the approval flow, and to improv security.

For example, when the acquired aggregate signature is an aggregate signature generated such that the validity thereof is verifiable with a past aggregate public key instead of the latest aggregate public key, the verification unit 614 alters the aggregate signature and verifies the validity of the altered aggregate signature with the acquired aggregate public key. Specifically, the verification unit 614 alters the aggregate signature, based on any public key that is not aggregated in the past aggregate public key but aggregated in the acquired aggregate public key. Then, the verification unit 614 verifies the validity of the acquired aggregate signature by verifying the validity of the altered aggregate signature with the acquired aggregate public key.

More specifically, the verification unit 614 alters the aggregate signature by embedding the reciprocal of any public key that is not aggregated in the past aggregate public key but aggregated in the acquired aggregate public key, into the aggregate signature. Then, when the altered aggregate signature is determined to be valid with the acquired aggregate public key, the verification unit 614 determines that the acquired aggregate signature is also valid. On the other hand, when the altered aggregate signature is determined to be not valid with the acquired aggregate public key, the verification unit 614 determines that the acquired aggregate signature is also not valid. This allows the verification unit 614 to verify the validity of the aggregate signature, to verify the validity of the document information and the validity of the approval flow, and to improv security.

For example, when the acquired aggregate signature is an aggregate signature generated such that the validity thereof is verifiable with a past aggregate public key instead of the latest aggregate public key, the verification unit 614 may alter the aggregate public key and verify the validity of the acquired aggregate signature with the altered aggregate public key. Specifically, the verification unit 614 alters the aggregate public key, based on any public key that is aggregated in the past aggregate public key but is not aggregated in the acquired aggregate public key. Then, the verification unit 614 verifies the validity of the acquired aggregate signature with the altered aggregate public key.

More specifically, the verification unit 614 alters the acquired aggregate public key by adding any public key that is aggregated in the past aggregate public key but is not aggregate in the acquired aggregate public key, to the acquired aggregate public key. Then, the verification unit 614 verifies the validity of the acquired aggregate signature with the altered aggregate public key. This allows the verification unit 614 to verify the validity of the aggregate signature, to verify the validity of the document information and the validity of the approval flow, and to improv security.

The second output unit 615 outputs a processing result of at least any one of the functional units. The output format is, for example, display on a display, print output to a printer, transmission to an external device by the network I/F 503, or storage in a storage area such as the memory 502 or the recording medium 505. This allows the second output unit 615 to make it possible for the verifier to be notified of the processing result of at least any one of the functional units.

The second output unit 615 outputs the result of verification by the verification unit 614, for example. Specifically, the second output unit 615 outputs a result of verifying the validity of the acquired aggregate public key such that the verifier can refer to the result. Specifically, the second output unit 615 also outputs a result of verifying the validity of the acquired aggregate signature such that the verifier can refer to the result. This allows the second output unit 615 to avoid circumstances that prompt the verifier to erroneously regard an invalid aggregate signature as a valid aggregate signature and erroneously regard invalid document information as valid document information, and to maintain security.

Here, the case where the information processing device 100 does not include the second acquisition unit 611, the second initial key registration unit 612, the second new key registration unit 613, the verification unit 614, and the second output unit 615 has been described, but this is not restrictive. For example, there may be a case where the information processing device 100 includes the second acquisition unit 611, the second initial key registration unit 612, the second new key registration unit 613, the verification unit 614, and the second output unit 615.

### (Specific Functional Configuration Example of Signature Control System 200)

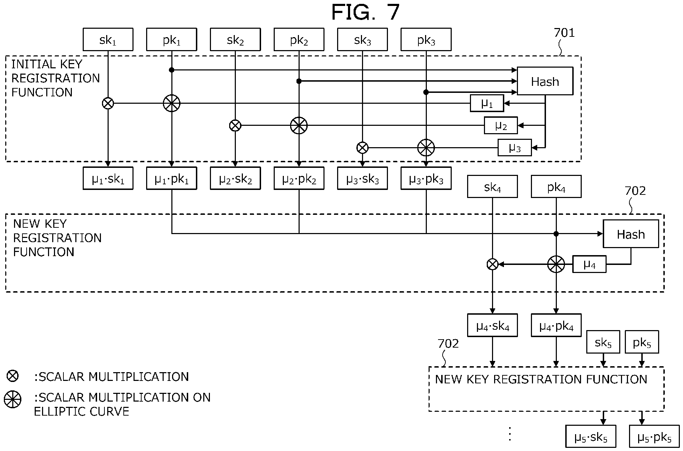

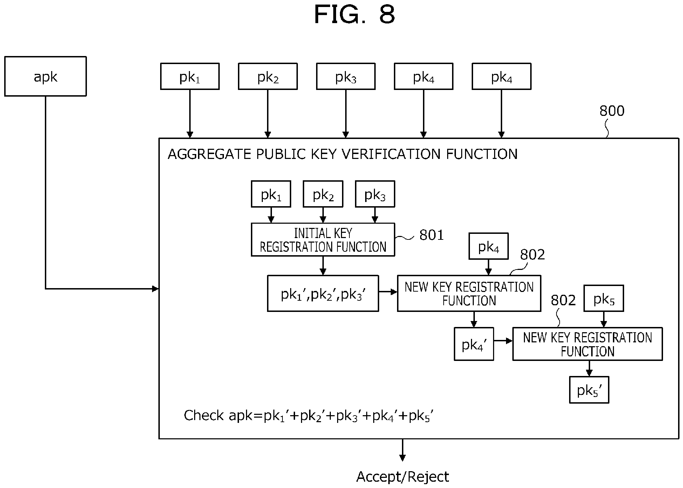

Next, a specific functional configuration example of the signature control system 200 will be described with reference to FIGs. 7 and 8. For example, specific functional configuration examples of various devices included in the signature control system 200 will be described with reference to FIGs. 7 and 8.

FIG. 7 is a block diagram illustrating a specific functional configuration example of the information processing device 100. The information processing device 100 has an initial key registration function 701 and a new key registration function 702. The initial key registration function 701 implements the first initial key registration unit 602 described above. The new key registration function 702 implements the first new key registration unit 603 described above.

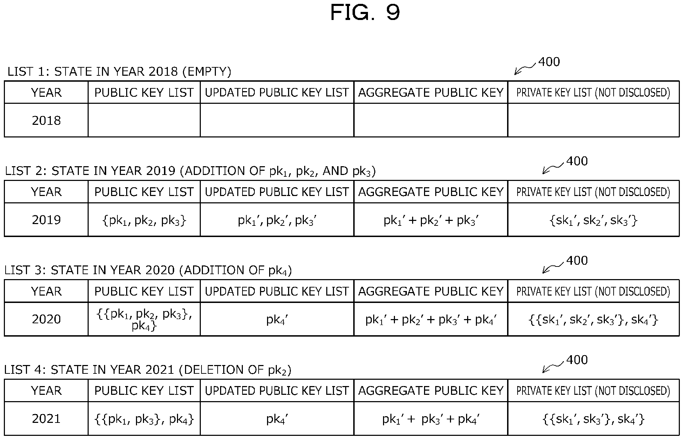

The information processing device 100 stores a public key list L in the public key management table 400. When adding a public key to the public key list L, the information processing device 100 updates the public key list L such that the public key can be specified as to at which time the public key was added to the public key list L. Here, a change in the storage contents of the public key management table 400 will be described later with reference to FIG. 9, for example.

The initial key registration function 701 works when a public key is added to the public key list L for the first time and is no longer in an empty state. The initial key registration function 701 acquires an initial public key list L = {pk₁, pk₂, pk₃} and an initial private key list R = {sk₁, sk₂, sk₃} corresponding to the initial public key list L = {pk₁, pk₂, pk₃}. The initial public key list L is a public key list L to which a plurality of public keys has been added for the first time and which is no longer in an empty state. The private key is, for example, a scalar value. The public key is, for example, a point on an elliptic curve.

The initial key registration function 701 calculates µᵢ <- H(L, pkᵢ), based on a hash function H(), where i = 1, 2, and 3 is satisfied. Specifically, the hash function H() is HASH(str(pk₁)∥...∥str(pkₙ)∥str(pkᵢ)). The number of public keys is denoted by n. HASH() is, for example, a cryptographic hash function. For example, when any character string is input, HASH() outputs a character string having a fixed length. A function that converts a point on an elliptic curve into a character string is denoted by str().

For i = 1, 2, and 3, the initial key registration function 701 updates the private keys as skᵢ' = uᵢ·skᵢ. In addition, for i = 1, 2, and 3, the initial key registration function 701 updates the public keys as pkᵢ' = µᵢ*pkᵢ. Here, · indicates a scalar product. In addition, * indicates multiplication on an elliptic curve. The initial key registration function 701 generates an updated public key list L' = {pk₁', pk₂', pk₃'}.

Based on the updated public key list L' = {pk₁', pk₂', pk₃'}, the aggregate public key apk = pk₁' + pk₂' + pk₃' is calculated. The calculated aggregate public key apk has resistance to Rogue-key Attack.

The new key registration function 702 works when a public key is added to the public key list L at the second time. The private key corresponding to the added public key is added to the private key list R in line with the added public key. Here, it is assumed that a public key pk₄ is added to the public key list L. In addition, it is assumed that a private key sk₄ is added to the private key list R. The new key registration function 702 acquires the current public key list L and the current updated public key list L'. The new key registration function 702 calculates µ₄ <- H(L', pk₄), based on the hash function H().

The new key registration function 702 updates the private key as sk₄' = µ₄·sk₄. The new key registration function 702 updates the public key as pk₄' = µ₄*pk₄. The new key registration function 702 updates the public key list L to a public key list L = {{pk₁, pk₂, pk₃}, pk₄}. The new key registration function 702 updates the updated public key list L' to an updated public key list L' = {pk₄'}.

Based on the updated public key list L' = {pk₄'}, the aggregate public key apk is updated to an aggregate public key apk = apk + pk₄'. The updated aggregate public key apk has resistance to Rogue-key Attack.

The new key registration function 702 works when a public key is added to the public key list L at the third and subsequent times. The private key corresponding to the added public key is added to the private key list R in line with the added public key. Here, it is assumed that a public key pk₅ is added to the public key list L. In addition, it is assumed that a private key sks is added to the private key list R. The new key registration function 702 acquires the current public key list L and the current updated public key list L'. The new key registration function 702 calculates µ₅ ← H(L', pk₅), based on the hash function H(). Here, since L' = {pk₄'} includes the hash values corresponding to {pk₁, pk₂, pk₃}, pk₄' is only supposed to be input to the hash function H().

The new key registration function 702 updates the private key as sks' = µ₅·sk₅. The new key registration function 702 updates the public key as pk₅' = µ₅*pk₅. The new key registration function 702 updates the public key list L to a public key list L = {{{pk₁, pk₂, pk₃}, pk₄}, pk₅}. The new key registration function 702 updates the updated public key list L' to an updated public key list L' = {pk₅'}.

Based on the updated public key list L' = {pks'}, the aggregate public key apk is updated to an aggregate public key apk = apk + pk₅'. The updated aggregate public key apk has resistance to Rogue-key Attack. This allows the information processing device 100 to bring the aggregate signature into a reconfigurable status without updating the public keys once registered. In addition, the information processing device 100 can include hash values of a plurality of public keys into the updated public key and may avoid Rogue-key Attack.

FIG. 8 is a block diagram illustrating a specific functional configuration example of the verification-side terminal 206. The verification-side terminal 206 has an aggregate public key verification function 800. The aggregate public key verification function 800 includes an initial key registration function 801 and a new key registration function 802. The initial key registration function 801 implements the second initial key registration unit 612 described above. The new key registration function 802 implements the second new key registration unit 613 described above. The aggregate public key verification function 800 implements the verification unit 614 described above.

The aggregate public key verification function 800 acquires an aggregate signature σ, the public key list L = {{{pk₁, pk₂, pk₃}, pk₄}, pk₅}, and the aggregate public key apk. The aggregate public key verification function 800 specifies the initially added public keys {pk₁, pk₂, pk₃} in the public key list L and sets the specified public keys {pk₁, pk₂, pk₃} in an initial public key list Lᵢₙᵢₜ. The aggregate public key verification function 800 inputs the initial public key list Lᵢₙᵢₜ = {pk₁, pk₂, pk₃} to the initial key registration function 801.

The initial key registration function 801 works similarly to the initial key registration function 701. The initial key registration function 801 acquires the initial public key list Lᵢₙᵢₜ = {pk₁, pk₂, pk₃}. The initial key registration function 801 calculates µᵢ ← H(L, pkᵢ), based on the hash function H(), where i = 1, 2, and 3 is satisfied. For i = 1, 2, and 3, the initial key registration function 801 updates the public keys as pkᵢ' = µᵢ*pkᵢ. The initial key registration function 801 generates an updated public key list L' = {pk₁', pk₂', pk₃'}.

The aggregate public key verification function 800 acquires an updated public key list L' = {pk₁', pk₂', pk₃'}. The aggregate public key verification function 800 calculates an aggregate public key apk' = pk₁' + pk₂' + pk₃', based on the acquired updated public key list L' = {pk₁', pk₂', pk₃'}.

When the public key list L includes the public key added at the second time, the aggregate public key verification function 800 specifies the added public key. Here, it is assumed that the public key {pk₄} added at the second time is specified. The aggregate public key verification function 800 inputs the acquired updated public key list L' = {pk₁', pk₂', pk₃'} and the specified public key {pk₄} added at the second time, to the new key registration function 802.

The new key registration function 802 works similarly to the new key registration function 702. The new key registration function 802 acquires the updated public key list L' = {pk₁', pk₂', pk₃'} and the public key {pk₄} added at the second time. The new key registration function 802 calculates µ₄ <- H(L', pk₄), based on the hash function H(). The new key registration function 802 updates the public key as pk₄' = µ₄*pk₄. The new key registration function 802 updates the updated public key list L' to un updated public key list L' = {pk₄'}.

The aggregate public key verification function 800 acquires the updated public key list L' = {pk₄'}. The aggregate public key verification function 800 updates the aggregate public key apk' to an aggregate public key apk' = apk' + pk₄', based on the acquired updated public key list L' = {pk₄'}.

When the public key list L includes the public keys added at the third and subsequent times, the aggregate public key verification function 800 sequentially specifies the added public keys. Here, it is assumed that the public key {pks} added at the third time is specified. The aggregate public key verification function 800 inputs the acquired updated public key list L' = {pk₄'} and the specified public key {pks} added at the third time to the new key registration function 802.

The new key registration function 802 works similarly to the new key registration function 702. The new key registration function 802 acquires the updated public key list L' = {pk₄'} and the public key {pks} added at the third time. The new key registration function 802 calculates µ₅ ← H(L', pk₅), based on the hash function H(). The new key registration function 802 updates the public key as pk₅' = µ₅*pk₅. The new key registration function 802 updates the updated public key list L' to an updated public key list L' = {pk₅'}.

The aggregate public key verification function 800 acquires the updated public key list L' = {pk₅'}. The aggregate public key verification function 800 updates the aggregate public key apk' to an aggregate public key apk' = apk' + pk₅', based on the acquired updated public key list L' = {pk₅'}.

Each time the public keys added to the public key list L at the third and subsequent times are specified, the aggregate public key verification function 800 similarly inputs the acquired updated public key list L' and the added public keys to the new key registration function 802. The new key registration function 802 similarly updates the public keys and also updates the updated public key list L'. The aggregate public key verification function 800 similarly updates the aggregate public key apk'.

Thereafter, the aggregate public key verification function 800 determines whether or not the aggregate public key apk' matches the acquired aggregate public key apk. Here, when determining that the aggregate public key apk' matches the acquired aggregate public key apk, the aggregate public key verification function 800 determines that the acquired aggregate public key apk is valid. On the other hand, when determining that the aggregate public key apk' does not match the acquired aggregate public key apk, the aggregate public key verification function 800 determines that the acquired aggregate public key apk is not valid.

When the aggregate public key apk is valid, the verification-side terminal 206 determines the validity of the aggregate signature σ, using the aggregate public key apk. For example, the verification-side terminal 206 transmits a request for reconfiguring the acquired aggregate signature σ to the information processing device 100. For example, the information processing device 100 specifies a public key that is not aggregated in the past aggregate public key apk that can verify the aggregate signature σ, but is aggregated in the latest aggregate public key apk. Then, for example, the information processing device 100 reconfigures the aggregate signature σ as an aggregate signature σ^, by embedding the reciprocal of the specified public key into the aggregate signature σ.

The information processing device 100 transmits the reconfigured aggregate signature σ^ to the verification-side terminal 206. The verification-side terminal 206 verifies the validity of the acquired aggregate signature σ, by verifying the validity of the reconfigured aggregate signature σ^ using the aggregate public key apk. This allows the verification-side terminal 206 to appropriately verify the validity of the aggregate signature σ.

### (Change in Storage Contents of Public Key Management Table 400)

Next, a change in the storage contents of the public key management table 400 will be described with reference to FIG. 9.

FIG. 9 is an explanatory diagram illustrating a change in the storage contents of the public key management table 400. As illustrated in FIG. 9, the public key management table 400 is in an empty state in the year 2018, for example.

For example, when the year 2019 begins, since the public keys pk₁, pk₂, and pk₃ have been newly added to the public key list L, the public key management table 400 stores the public key list L = {pk₁, pk₂, pk₃}. In addition, for example, since the updated public key list L' = {pk₁', pk₂', pk₃'} has been generated, the public key management table 400 stores the updated public key list L' = {pk₁', pk₂', pk₃'}. In addition, for example, the public key management table 400 stores an updated private key list R' = {sk₁', sk₂', sk₃'} corresponding to the updated public key list L' = {pk₁', pk₂', pk₃'}. In addition, for example, since the aggregate public key apk = pk₁' + pk₂' + pk₃' has been calculated, the public key management table 400 stores the calculated aggregate public key apk.

For example, when the year 2020 begins, since the public key pk₄ has been newly added to the public key list L, the public key management table 400 updates the stored public key list L to the public key list L = {{pk₁, pk₂, pk₃}, pk₄}. At this time, the public key management table 400 updates the public key list L in a format that enables to distinguish between the public keys pk₁, pk₂, and pk₃ added at the first time and the public key pk₄ added at the second time with the parentheses put around.

In addition, for example, since the updated public key list L' = {pk₄'} has been generated, the public key management table 400 updates the stored updated public key list L' to the updated public key list L' = {pk₄'}. In addition, for example, the public key management table 400 updates the stored updated private key list R'to the updated private key list R' = {{sk₁', sk₂', sk₃'}, sk₄'} corresponding to the updated public key list L' = {pk₄'}. In addition, for example, since the aggregate public key apk = pk₁' + pk₂' + pk₃' + pk₄' has been calculated, the public key management table 400 updates the stored aggregate public key apk to the calculated aggregate public key apk = pk₁' + pk₂' + pk₃' + pk₄'.

For example, when the year 2021 begins, the public key management table 400 updates the stored public key list L to the public key list L = {{pk₁, pk₃}, pk₄} when the public key pk₂ is invalidated. In addition, for example, the public key management table 400 updates the stored updated private key list R' to the updated private key list R' = {{sk₁', sk₃'}, sk₄'}. In addition, for example, since the aggregate public key apk = pk₁' + pk₃' + pk₄' has been calculated, the public key management table 400 updates the stored aggregate public key apk to the calculated aggregate public key apk = pk₁' + pk₃' + pk₄'. The public key pk₂ or the updated public key pk₂' may be left in any storage area to make the past aggregate public key including the updated public key pk₂' reproducible.

This allows the public key management table 400 to make the state of the public key list L in each year specifiable. In addition, the public key management table 400 does not have to store a past aggregate public key other than the latest aggregate public key and may reduce the cost. Since the public key management table 400 stores the updated private key, the public key management table 400 may go without updating the private key every time the updated private key is used and may reduce the cost.

Here, the case where the public key management table 400 stores the public key list L in a format that enables to distinguish at which time each public key was added to the public key list L with the parentheses put around has been described, but this is not restrictive. There may be a case where the public key management table 400 stores the public key list L in a format that enables to distinguish at which time each public key was added to the public key list L with other than the parentheses put around.

### (Example of Working of Signature Control System 200)

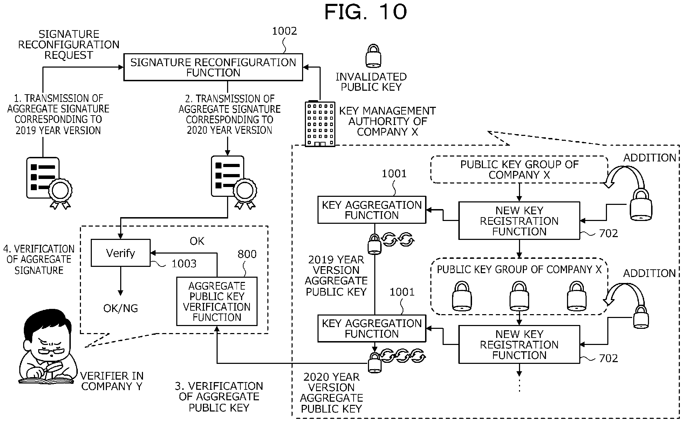

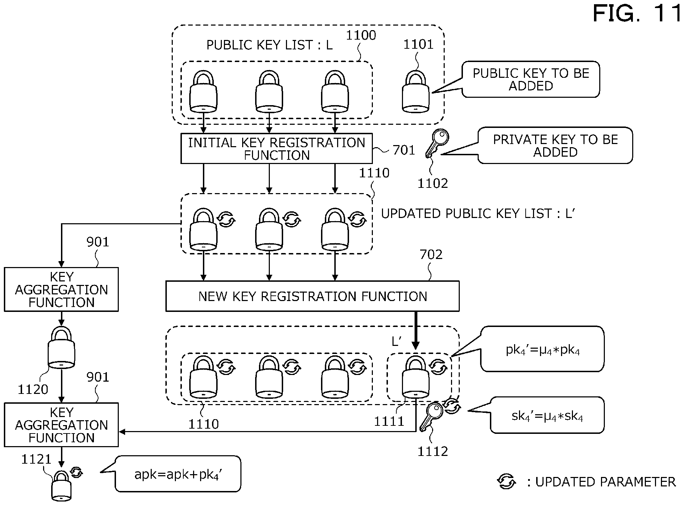

Next, examples of the working of the signature control system 200 will be described with reference to FIGs. 10 and 11.

FIGs. 10 and 11 are explanatory diagrams illustrating examples of the working of the signature control system 200. Here, the signature control system 200 includes, for example, a company X at the signature side and a company Y as a verifier. The company X has, for example, a key management authority. The key management authority includes, for example, the information processing device 100. The company Y has, for example, the verification-side terminal 206.

In the year 2019, it is assumed that the information processing device 100 adds a new public key to a public key group of the company X and generates an aggregate public key of the 2019 year version by the new key registration function 702 and a key aggregation function 1001. The key aggregation function 1001 is a functional unit that generates an aggregate public key, based on the updated public key list L'.

In addition, it is assumed that an electronic contract is concluded between the company X and the company Y in the year 2019, and the information processing device 100 generates an aggregate signature of the 2019 year version whose validity is verifiable with the 2019 year version aggregate public key. The verification-side terminal 206 is assumed to acquire the 2019 year version electronic signature from the information processing device 100 and store the acquired electronic signature.

It is assumed that, since the company X has begun using the signature of an auditor in the approval flow since the year 2020, the information processing device 100 newly generates the private key and the public key corresponding to the auditor. Then, it is assumed that the information processing device 100 adds the new public key to the public key group of the company X and updates the 2019 year version aggregate public key to the 2020 year version aggregate public key by the new key registration function 702 and the key aggregation function 1001. Here, the validity of the 2019 year version aggregate signature stored in the verification-side terminal 206 is directly verifiable with the 2019 year version aggregate public key, but is not directly verifiable with the 2020 year version aggregate public key.

In relation to this, a case where the verification-side terminal 206 tries to verify the validity of the 2019 year version aggregate signature is conceivable. In this case, the verification-side terminal 206 transmits a request for reconfiguring the 2019 year version aggregate signature, to the information processing device 100. The information processing device 100 reconfigures the 2019 year version aggregate signature by a signature reconfiguration function 1002 and transmits the reconfigured aggregate signature to the verification-side terminal 206. The signature reconfiguration function 1002 is a functional unit that reconfigures the aggregate signature.

For example, the information processing device 100 confirms that the aggregate signature to be reconfigured is the 2019 year version and specifies a public key that is aggregated in the 2020 year version aggregate public key but is not aggregated in the 2019 year version aggregate public key, based on the public key management table 400. For example, the information processing device 100 reconfigures the aggregate signature by embedding the reciprocal of the specified public key into the aggregate signature. For example, the information processing device 100 transmits the reconfigured aggregate signature to the verification-side terminal 206.

The verification-side terminal 206 verifies the validity of the reconfigured aggregate signature with the 2020 year version aggregate public key with a Verify 1003. The Verify 1003 is a functional unit that verifies the validity of the aggregate signature. This allows the verification-side terminal 206 to appropriately verify the validity of the aggregate signature even without the 2019 year version aggregate public key. Next, description of FIG. 11 will be given, and an example of the working of the information processing device 100 to generate the aggregate public key will be described.

In FIG. 11, the information processing device 100 has the public key list L. The public key list L includes a public key group 1100 initially added. Here, it is assumed that the information processing device 100 adds a new public key 1101 to the public key list L and adds a new private key 1102 to the private key list R. It is assumed that the initial key registration function 701 has altered the public keys of the public key group 1100 and has generated the updated public key list L' = a public key group 1110. It is assumed that the key aggregation function 1001 has aggregated the updated public key list L' = the public key group 1110 and has generated an aggregate public key 1120.

In this case, the new key registration function 702 acquires the new public key 1101 and the updated public key list L' = the public key group 1110. The new key registration function 702 updates the new public key 1101, based on a hash value µ₄ corresponding to the public key 1101, and generates a public key 1111. The new key registration function 702 sets the updated public key list L' = the public key 1111. In addition, the new key registration function 702 updates the private key 1102, based on the hash value µ₄ corresponding to the new public key 1101, and generates a private key 1112. The key aggregation function 1001 updates the aggregate public key 1120 to an aggregate public key 1121, based on the updated public key list L' = the public key 1111.

### (Effects of Signature Control System 200)

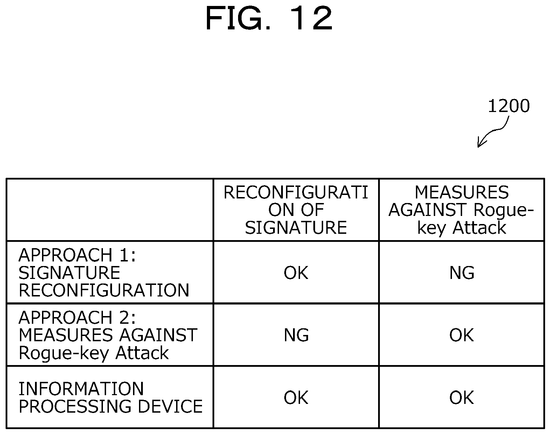

Next, effects of the signature control system 200 will be described with reference to FIG. 12.

FIG. 12 is an explanatory diagram illustrating effects of the signature control system 200. As illustrated in a table 1200 in FIG. 12, the conventional approach 1 is not capable of taking measures against Rogue-key Attack. The conventional approach 1 is, for example, an approach that reconfigures the aggregate signature corresponding to the past aggregate public key obtained by aggregating a past public key group and enables verification of the validity of the reconfigured aggregate signature with the latest aggregate public key obtained by aggregating the latest public key group.

In addition, as illustrated in the table 1200 in FIG. 12, it is difficult to reconfigure the aggregate signature with the conventional approach 2. The conventional approach 2 is, for example, an approach that alters each public key among a plurality of public keys with hash values corresponding to each public key and then generates an aggregate public key, thereby making it difficult to carry out Rogue-key Attack. In contrast to these, as illustrated in the table 1200 in FIG. 12, the information processing device 100 may make it difficult to carry out Rogue-key Attack while enabling reconfiguration of the aggregate signature.

### (Key Aggregation Processing Procedure)

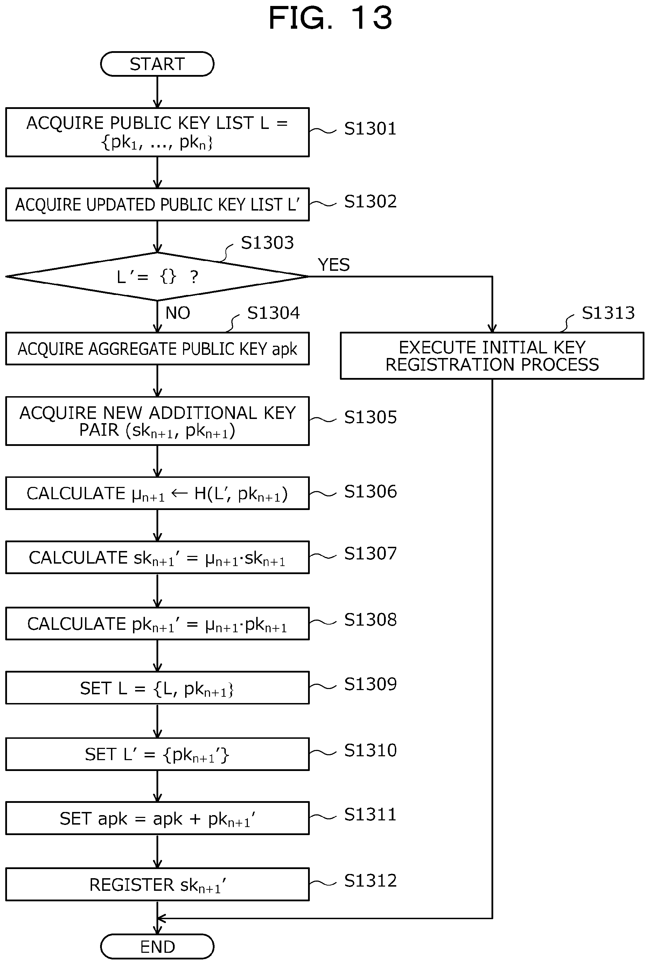

Next, an example of a key aggregation processing procedure executed by the information processing device 100 will be described with reference to FIG. 13. The key aggregation process is implemented by, for example, the CPU 301, a storage area such as the memory 302 or the recording medium 305, and the network I/F 303 illustrated in FIG. 3.

FIG. 13 is a flowchart illustrating an example of the key aggregation processing procedure. In FIG. 13, the information processing device 100 acquires the public key list L = {pk₁, ..., pkₙ} from the public key management table 400 (step S1301).

Next, the information processing device 100 acquires the updated public key list L' from the public key management table 400 (step S1302). Here, when the updated public key list L' is undefined, the information processing device 100 defines the updated public key list L' = {}.

Then, the information processing device 100 determines whether or not L' = {} is satisfied (step S1303). Here, when L' = {} is satisfied (Step S1303: Yes), the information processing device 100 proceeds to the processing in step S1313. On the other hand, when L' = {} is not satisfied (step S1303: No), the information processing device 100 proceeds to the processing in step S1304.

In step S1304, the information processing device 100 acquires the aggregate public key apk from the public key management table 400 (step S1304). Next, the information processing device 100 acquires a new additional key pair (skₙ₊₁, pkₙ₊₁) from the storage area (step S1305). Then, the information processing device 100 calculates µₙ₊₁ <- H(L', pkₙ₊₁) (step S1306).

Next, the information processing device 100 calculates skₙ₊₁' = µₙ₊₁·skₙ₊₁ (step S1307). Then, the information processing device 100 calculates pkₙ₊₁' = µₙ₊₁·pkₙ₊₁ (step S1308).

Next, the information processing device 100 sets L = {L, pkₙ₊₁} (step S1309). Then, the information processing device 100 sets L' = {pkₙ₊₁'} (step S1310).

Next, the information processing device 100 sets apk = apk + pkₙ₊₁' (step S1311). Then, the information processing device 100 registers skₙ₊₁' in the storage area (step S1312). Here, if it is a difficult situation to update the private key, the information processing device 100 may calculate skₙ₊₁' every time the private key is used. Then, the information processing device 100 ends the key aggregation process.

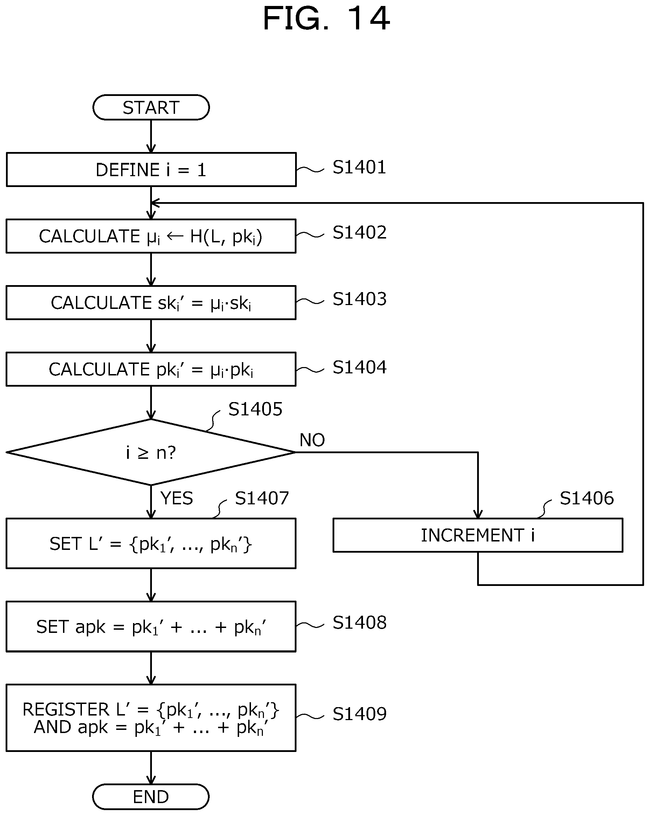

In step S1313, the information processing device 100 executes an initial key registration process to be described later with reference to FIG. 14 (step S1313). Then, the information processing device 100 ends the key aggregation process. This allows the information processing device 100 to maintain the aggregate public key in the latest state and to enable verification of the aggregate signature corresponding to the latest approval flow.

### (Initial Key Registration Processing Procedure)

Next, an example of an initial key registration processing procedure executed by the information processing device 100 will be described with reference to FIG. 14. The initial key registration process is implemented by, for example, the CPU 301, a storage area such as the memory 302 or the recording medium 305, and the network I/F 303 illustrated in FIG. 3.

FIG. 14 is a flowchart illustrating an example of the initial key registration processing procedure. The information processing device 100 defines i = 1 (step S1401).

Next, the information processing device 100 calculates µᵢ <- H(L, pkᵢ) (step S1402). Then, the information processing device 100 calculates skᵢ' = µᵢ·skᵢ (step S1403).

Next, the information processing device 100 calculates pkᵢ' = µᵢ·pkᵢ (step S1404). Then, the information processing device 100 determines whether or not i ≥ n is satisfied (step S1405). Here, when i ≥ n is satisfied (step S1405: Yes), the information processing device 100 proceeds to the processing in step S1407. On the other hand, when i ≥ n is not satisfied (step S1405: No), the information processing device 100 proceeds to the processing in step S1406.

In step S1406, the information processing device 100 increments i (step S1406). Then, the information processing device 100 returns to the processing in step S1402.

In step S1407, the information processing device 100 sets L' = {pk₁', ..., pkₙ'} (step S1407). Next, the information processing device 100 sets apk = pk₁' + ... + pkₙ' (step S1408).

Then, the information processing device 100 registers L' = {pk₁', ..., pkₙ'} and apk = pk₁' + ... + pkₙ' in the public key management table 400 (step S1409). Thereafter, the information processing device 100 ends the initial key registration process. This allows the information processing device 100 to generate the aggregate public key after altering the public keys so as to maintain security.

### (Key Verification Processing Procedure)

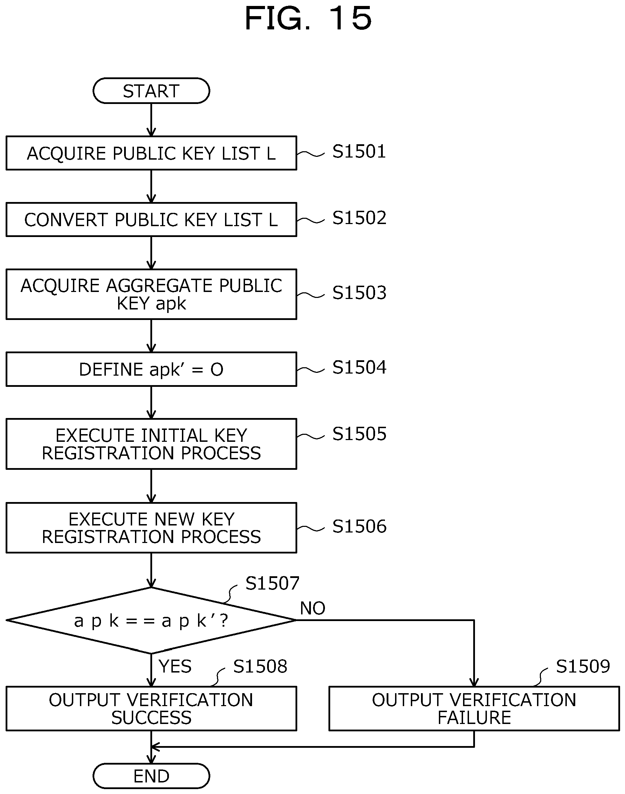

Next, an example of a key verification processing procedure executed by the verification-side terminal 206 will be described with reference to FIG. 15. The key verification process is implemented by, for example, the CPU 501, a storage area such as the memory 502 or the recording medium 505, and the network I/F 503 illustrated in FIG. 5.

FIG. 15 is a flowchart illustrating an example of the key verification processing procedure. In FIG. 15, the verification-side terminal 206 acquires the public key list L from the information processing device 100 (step S1501).

Next, the verification-side terminal 206 converts the public key list L = {{..., {{Lᵢₙᵢₜ, pkₖ₊₁}, pkₖ₊₂}, ...}, pkₙ} into L^ = {Lᵢₙᵢₜ, {pkₖ₊₁, {..., {pkₙ}, ...}}} (step S1502). Then, the verification-side terminal 206 acquires the aggregate public key apk from the information processing device 100 (step S1503).

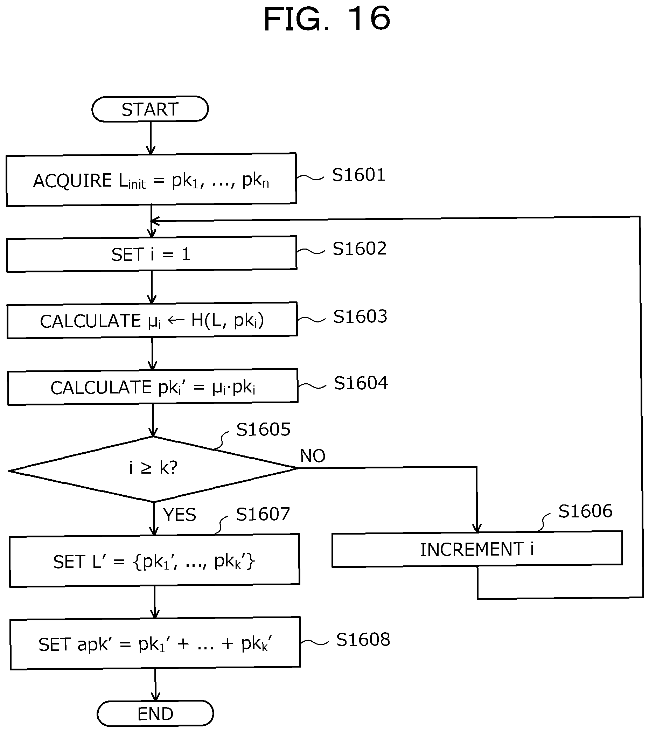

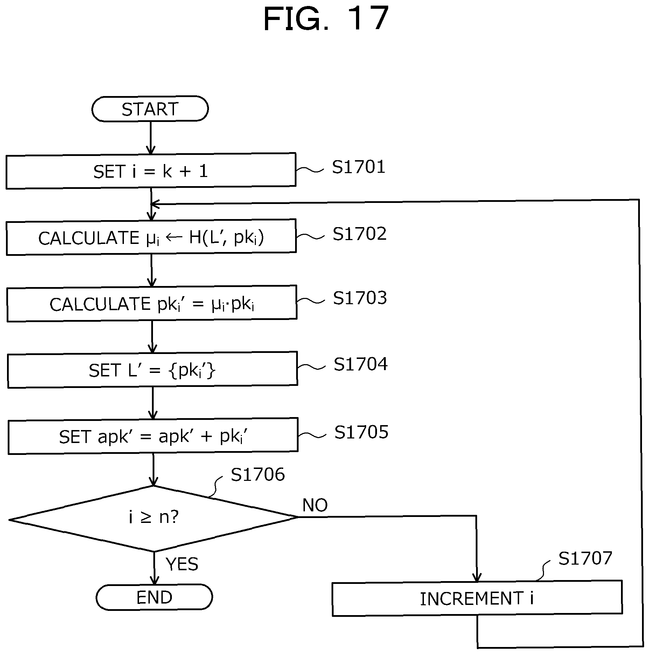

Next, the verification-side terminal 206 defines apk' = O (step S1504). Then, the verification-side terminal 206 executes an initial key registration process to be described later with reference to FIG. 16 (step S1505). The verification-side terminal 206 further executes a new key registration process to be described later with reference to FIG. 17 (step S1506).

Next, the verification-side terminal 206 determines whether or not apk == apk' is satisfied (step S1507). Here, when apk == apk' is satisfied (step S1507: Yes), the verification-side terminal 206 proceeds to the processing in step S1508. On the other hand, when apk == apk' is not satisfied (step S1507: No), the verification-side terminal 206 proceeds to the processing in step S1509.

In step S1508, the verification-side terminal 206 outputs verification success (step S1508). Then, the verification-side terminal 206 ends the key verification process.

In step S1509, the verification-side terminal 206 outputs verification failure (step S1509). Then, the verification-side terminal 206 ends the key verification process. This allows the verification-side terminal 206 to verify the validity of the aggregate public key and to improve security.

### (Initial Key Registration Processing Procedure)

Next, an example of an initial key registration processing procedure executed by the verification-side terminal 206 will be described with reference to FIG. 16. The initial key registration process is implemented by, for example, the CPU 501, a storage area such as the memory 502 or the recording medium 505, and the network I/F 503 illustrated in FIG. 5.

FIG. 16 is a flowchart illustrating an example of the initial key registration processing procedure. In FIG. 16, the verification-side terminal 206 acquires Lᵢₙᵢₜ = pk₁, ..., pkₙ (step S1601).

Next, the verification-side terminal 206 sets i = 1 (step S1602). Then, the verification-side terminal 206 calculates µᵢ <- H(L, pkᵢ) (step S1603).

Next, the verification-side terminal 206 calculates pkᵢ' = µᵢ·pkᵢ (step S1604). Then, the verification-side terminal 206 determines whether or not i ≥ k is satisfied (step S1605). Here, when i ≥ k is satisfied (step S1605: Yes), the verification-side terminal 206 proceeds to the processing in step S1607. On the other hand, when i ≥ k is not satisfied (step S1605: No), the verification-side terminal 206 proceeds to the processing in step S1606.

In step S1606, the verification-side terminal 206 increments i (step S1606). Then, the verification-side terminal 206 returns to the processing in step S1602.

In step S1607, the verification-side terminal 206 sets L' = {pk₁', ..., pkₖ'} (step S1607). Next, the verification-side terminal 206 sets apk' = pk₁' + ... + pkₖ' (step S1608). Then, the verification-side terminal 206 ends the initial key registration process. This allows the verification-side terminal 206 to trace how the public key has been updated in the information processing device 100 and to enable verification of the validity of the aggregate public key.

### (New Key Registration Processing Procedure)

Next, an example of a new key registration processing procedure executed by the verification-side terminal 206 will be described with reference to FIG. 17. The new key registration process is implemented by, for example, the CPU 501, a storage area such as the memory 502 or the recording medium 505, and the network I/F 503 illustrated in FIG. 5.

FIG. 17 is a flowchart illustrating an example of the new key registration processing procedure. In FIG. 17, the verification-side terminal 206 sets i = k + 1 (step S1701).

Next, the verification-side terminal 206 calculates µᵢ ← H(L', pkᵢ) (step S1702). Then, the verification-side terminal 206 calculates pkᵢ' = µᵢ·pkᵢ (step S1703).

Next, the verification-side terminal 206 sets L' = {pkᵢ'} (step S1704). Then, the verification-side terminal 206 sets apk' = apk' + pkᵢ' (step S1705).

Next, the verification-side terminal 206 determines whether or not i ≥ n is satisfied (step S1706). Here, when i ≥ n is not satisfied (step S1706: No), the verification-side terminal 206 increments i (step S1707) and returns to the processing in step S1702.

On the other hand, when i ≥ n is satisfied (step S1706: Yes), the verification-side terminal 206 ends the new key registration process. This allows the verification-side terminal 206 to trace how the public key has been updated in the information processing device 100 and to enable verification of the validity of the aggregate public key.

### (Reconfiguration Processing Procedure)

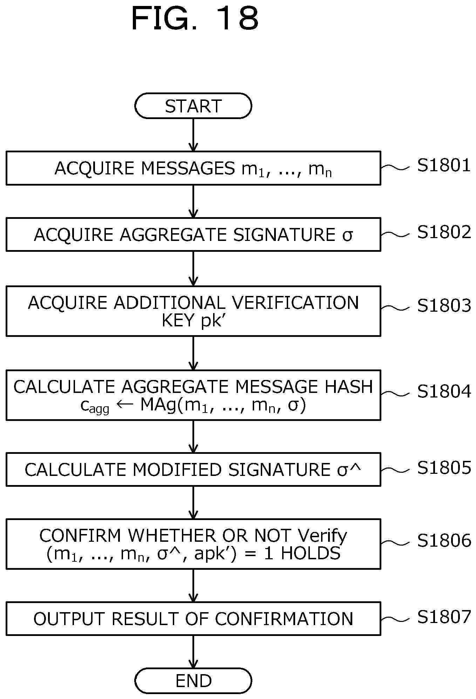

Next, an example of a reconfiguration processing procedure executed by the information processing device 100 will be described with reference to FIG. 18. The reconfiguration process is implemented, for example, by the CPU 301, a storage area such as the memory 302 or the recording medium 305, and the network I/F 303 illustrated in FIG. 3.

FIG. 18 is a flowchart illustrating an example of the reconfiguration processing procedure. In FIG. 18, the information processing device 100 acquires messages m₁, ..., mₙ (step S1801).

Next, the information processing device 100 acquires the aggregate signature σ (step S1802). Then, the information processing device 100 acquires an additional verification key pk' (step S1803). Here, pk' denotes a public key that is not aggregated in the aggregate public key for use in verifying the validity of the aggregate signature σ, but is added to the public key list later and is aggregated in the latest aggregate public key. Verify(m₁, ..., mₙ, σ, apk) = 1 holds. In addition, apk' = apk + pk' holds.

Next, the information processing device 100 calculates an aggregate message hash c_{agg} ← MAg(m₁, ..., mₙ, σ) (step S1804). Then, the information processing device 100 calculates a modified signature σ^, based on the aggregate signature σ and the aggregate message hash c_{agg} (step S1805).

Next, the information processing device 100 confirms whether or not Verify(m₁, ..., mₙ, σ^, apk') = 1 holds (step S1806). Then, the information processing device 100 outputs the result of the confirmation (step S1807). Thereafter, the information processing device 100 ends the reconfiguration process. This allows the information processing device 100 to enable verification of the validity of the past aggregate signature with the latest aggregate public key.

As described above, according to the information processing device 100, a request for adding a new public key to the public key group can be accepted. According to the information processing device 100, when the request is accepted, a public key different from the new public key can be generated based on information generated from a plurality of public keys included in the public key group and the new public key. According to the information processing device 100, the new public key can be added to the public key group, and the aggregate public key also can be updated based on the generated different public key. This allows the information processing device 100 to reduce the cost for verifying the validity of the aggregate signature with the aggregate public key while maintaining security.

According to the information processing device 100, the public key group after being added and the aggregate public key after being updated can be acquired. According to the information processing device 100, each of the first public keys initially included in the acquired public key group can be altered based on information generated from the first public keys. According to the information processing device 100, each of the second public keys added later to the acquired public key group can be altered based on information generated from another public key included in the public key group before the second public keys. According to the information processing device 100, the validity of the acquired aggregate public key can be verified based on the altered first public keys and the altered second public keys. This allows the information processing device 100 to maintain security.

According to the information processing device 100, the aggregate signature generated such that the validity thereof is verifiable with the past aggregate public key can be acquired. According to the information processing device 100, when it is determined that the acquired aggregate public key is valid as a result of the verification, the aggregate signature can be altered based on any public key that is not aggregated in the past aggregate public key but aggregated in the acquired aggregate public key. According to the information processing device 100, the validity of the acquired aggregate signature can be verified based on the acquired aggregate public key and the altered aggregate signature. This allows the information processing device 100 to avoid erroneously treating an invalid aggregate signature as a valid aggregate signature. In addition, the information processing device 100 may enable verification of the validity of the aggregate signature without referring to the past aggregate public key.

According to the information processing device 100, the aggregate signature generated such that the validity thereof is verifiable with the past aggregate public key can be acquired. According to the information processing device 100, when it is determined that the acquired aggregate public key is valid as a result of the verification, the acquired aggregate public key can be altered based on any public key that is aggregated in the past aggregate public key but is not aggregated in the acquired aggregate public key. According to the information processing device 100, the validity of the acquired aggregate signature can be verified based on the altered aggregate public key and the acquired aggregate signature. This allows the information processing device 100 to avoid erroneously treating an invalid aggregate signature as a valid aggregate signature. In addition, the information processing device 100 may enable verification of the validity of the aggregate signature without storing the past aggregate public key.

According to the information processing device 100, when the second and subsequent time requests are accepted, a public key different from the public key to be added this time can be generated based on information generated from the public keys generated last time and the public key to be added this time. This allows the information processing device 100 to reduce the processing cost.

According to the information processing device 100, when a request for deleting any public key from the public key group is accepted, the aggregate public key can be updated based on the any public key. This allows the information processing device 100 to update the aggregate public key to the latest state, to adapt the aggregate public key to the approval flow, and to enable appropriate generation of the aggregate signature.

Note that the information processing method described in the present embodiment can be implemented by executing a program prepared in advance on a computer such as a PC or a workstation. The information processing program described in the present embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), or the like. In addition, the information processing program described in the present embodiment may be distributed via a network such as the Internet.

### REFERENCE SIGNS LIST

- 100: Information processing device
- 101, 102, 1120, 1121: Aggregate public key
- 110, 1100, 1110: Public key group
- 111 to 115, 1101, 1111: Public key
- 200: Signature control system
- 201 to 203: Signature-side terminal
- 204: Private CA server
- 205: Public CA server
- 206: Verification-side terminal
- 210: Network
- 300, 500: Bus
- 301, 501: CPU
- 302, 502: Memory
- 303, 503: Network I/F
- 304, 504: Recording medium I/F
- 305, 505: Recording medium
- 400: Public key management table
- 600: First storage unit
- 601: First acquisition unit
- 602: First initial key registration unit
- 603: First new key registration unit
- 604: Update unit
- 605: First output unit
- 610: Second storage unit
- 611: Second acquisition unit
- 612: Second initial key registration unit
- 613: Second new key registration unit
- 614: Verification unit
- 615: Second output unit
- 701, 801: Initial key registration function
- 702, 802: New key registration function
- 800: Aggregate public key verification function
- 1001: Key aggregation function
- 1002: Signature reconfiguration function
- 1003: Verify
- 1102, 1112: Private key
- 1200: Table

## Claims

1. A control method comprising a process that is executed by a computer and includes:
accepting requests intended to add a new public key to a public key group that includes a plurality of public keys aggregated in an aggregate public key used to verify validity of an aggregate signature obtained by aggregating a plurality of signatures;
generating, when accepting the requests, a different public key from the new public key, based on information generated from the plurality of public keys included in the public key group and the new public key; and
adding the new public key to the public key group, and also updating the aggregate public key, based on the generated different public key.

2. The control method according to claim 1, comprising the process that is executed by the computer and includes:
acquiring the public key group after being added and the aggregate public key after being updated;
altering each of first public keys initially included in the acquired public key group, based on the information generated from the first public keys;
altering each of second public keys added later to the acquired public key group, based on the information generated from another public key included in the public key group before the second public keys; and
verifying the validity of the acquired aggregate public key, based on the altered first public keys and the altered second public keys.

3. The control method according to claim 2, comprising the process that is executed by the computer and includes:
acquiring the aggregate signature generated such that the validity is verifiable with the aggregate public key that is of past and in a state different from the state of the acquired aggregate public key;
when it is determined that the acquired aggregate public key is valid as a result of the verifying, altering the aggregate signature, based on any public key that is not aggregated in the aggregate public key that is of the past but aggregated in the acquired aggregate public key, and
verifying the validity of the acquired aggregate signature, based on the acquired aggregate public key and the altered aggregate signature.

4. The control method according to claim 2 or 3, comprising the process that is executed by the computer and includes:
acquiring the aggregate signature generated such that the validity is verifiable with the aggregate public key that is of past and in a state different from the state of the acquired aggregate public key;
when it is determined that the acquired aggregate public key is valid as a result of the verifying, altering the acquired aggregate public key, based on any public key that is aggregated in the aggregate public key that is of the past but is not aggregated in the acquired aggregate public key, and
verifying the validity of the acquired aggregate signature, based on the altered aggregate public key and the acquired aggregate signature.

5. The control method according to any one of claims 1 to 4,
wherein the generating includes
generating, when the requests for second and subsequent times are accepted, the different public key from the public keys to be added this time, based on the information generated from the public keys generated last time and the public keys to be added this time.

6. The control method according to any one of claims 1 to 5,
wherein the updating includes
updating, when the requests intended to delete any public key from the public key group are accepted, the aggregate public key, based on the any public key.

7. A control program that causes at least one computer to execute a process, the process comprising:
accepting requests intended to add a new public key to a public key group that includes a plurality of public keys aggregated in an aggregate public key used to verify validity of an aggregate signature obtained by aggregating a plurality of signatures;
generating, when accepting the requests, a different public key from the new public key, based on information generated from the plurality of public keys included in the public key group and the new public key; and
adding the new public key to the public key group, and also updating the aggregate public key, based on the generated different public key.

8. An information processing device comprising:
a control unit configured to:
accept requests intended to add a new public key to a public key group that includes a plurality of public keys aggregated in an aggregate public key used to verify validity of an aggregate signature obtained by aggregating a plurality of signatures,
generate, when accepting the requests, a different public key from the new public key, based on information generated from the plurality of public keys included in the public key group and the new public key, and
add the new public key to the public key group, and also updating the aggregate public key, based on the generated different public key.
